Europäisches Patentamt

(19) European Patent Office

Office européen des brevets

(11) Publication number: **0 142 284**
**B1**

(12) **EUROPEAN PATENT SPECIFICATION**

(45) Date of publication of patent specification: **26.09.90**

(51) Int. Cl.⁵: **B 01 L 9/06, B 29 C 45/33**

(21) Application number: **84307121.8**

(22) Date of filing: **17.10.84**

(54) A single-piece injection-moulded rack and a mould for its manufacture.

(30) Priority: **10.11.83 US 550574**

(43) Date of publication of application:
**22.05.85 Bulletin 85/21**

(45) Publication of the grant of the patent:
**26.09.90 Bulletin 90/39**

(84) Designated Contracting States:
**BE CH DE FR GB IT LI LU NL SE**

(56) References cited:
**EP-A-0 063 250**
**EP-A-0 081 292**
**DE-C- 839 114**
**GB-A- 579 562**
**GB-A-1 371 240**
**GB-A-1 535 229**
**GB-A-2 064 998**
**US-A-2 556 590**
**US-A-3 388 807**
**US-A-3 930 780**
**US-A-3 977 821**

(73) Proprietor: **Nalge Company**
**75 Panorama Creek Drive P O Box 20365**
**Rochester New York 14602 (US)**

(72) Inventor: **Mehra, Ravinder C.**
**One Crow Hill Drive**
**Fairport, NY 14450 (US)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

The present invention relates generally to a single-piece injection moulded rack and to the mould for producing it. In a preferred form, the invention is advantageously employed to provide a plastics material test tube rack for medical and laboratory use.

Test tube racks are widely used where it is desirable to perform biological or chemical tests in a related sequence or on a related group of specimens. Before performing such tests, it is frequently necessary to sterilize the test tubes and rack simultaneously. Many operations, as well, require the rack, the test tubes and their contents to be placed in an incubator to facilitate a chemical reaction or the growth of organisms within the medium under test. Often, autoclaves or incubators available in a particular laboratory have limited internal space, making it highly desirable to have a rack which will hold a dense array of test tubes.

As test tubes are more tightly grouped, however, it becomes increasingly necessary for the individual tubes to be maintained in proper alignment, so that material may be introduced or withdrawn from the tubes in an orderly sequential manner. In addition, the contents of the tubes must remain readily observable by the technician.

The conventional wire rack is extensively employed in an effort to achieve these goals. Typically, such racks are three-tiered structures, the individual tiers being rectangular grids formed by welding together individual metal rods. The tiers are then operatively joined by welding additional metal rods to each tier, vertically from top to bottom. The completed assembly is thereafter coated with a thin layer of conforming plastics material to protect the metal against corrosion and chemical attack. However, with usage, the plastics coating wears off, leading to rust and corrosion which render the racks unusable.

While such wire racks function satisfactorily, they are costly to produce and, because of their weight, costly to ship in quantity. These costs are shared by the end user, making wire racks economically unsuitable for use as a disposable item of laboratory equipment. These racks, thus, are ill-suited for analytical operations in which the hazardous substances used dictate disposal of both test tubes and racks.

For such hazardous procedures, test tubes made of plastics materials are commercially attractive. Although a number of plastics test tube racks have been proposed, none has achieved the dense packing and tube visibility advantages of the wire rack. The usual approach, with such plastics racks, has been to provide multiple plastics plates, each of the plates having a plurality of apertures for receiving the test tubes. Typically, the apertures are circular, to conform to the shape of the test tubes. Often the plates are separately moulded and thereafter assembled, using other separately moulded components. Since these single plates are relatively thin, they are easily formed by a simple mould section having projecting circular cores which cooperatively mate against a planar mould half. The general design and construction of steel injection moulds, however, does not allow for the compact and dense placement of metal cores to mould holes for various reasons. For example, the steel sections between the cores which mould the holes become too thin and flimsy for practical application. Also, the effective location of cooling channels becomes impractical. Consequently, these multilevel plastics test tube racks generally have widely-spaced apertures and are assembled from several separately moulded components.

In addition to the limitation on aperture density, this type of plastics test tube rack requires assembly, thus yielding up some of the cost benefits associated with plastics manufacture. It would be most desirable if a plastics test tube rack could be manufactured as a single piece in a fully automated mould. It would be particularly advantageous if such a rack could also provide the dense two-dimensional test tube arrays and high visibility afforded by wire racks.

The present invention achieves the objectives of equalling the test tube density and viewability advantages of the wire rack. In accomplishing these objectives in a single-piece one-shot injection-moulding operation, the present invention significantly reduces the manufacturing cost associated with assembling a wire rack from individual metal rods as described above. As a consequence, the present invention provides a rack which can be offered more economically to the end user. Since the unique configurations of both the rack and the mould are suitable for a wide variety of plastics materials, racks can be produced which have functional characteristics ranging from durability and reusability to single-use disposability.

In accordance with the invention, a multitier rack for holding an array of test tubes or similar articles is provided. The unique construction of the rack and, in particular, the configuration of the intermediate tier, permits close spacing of the apertures, which at the same time minimizing the required thickness of the walls between apertures. An overall airy appearance results, greatly facilitating viewing of the contents of test tubes held by the rack. While the invention will be described throughout with respect to a three-tiered rack, from the ensuing description it will become apparent to those skilled in the art that more than one intermediate tier may be included in the structure.

In accordance with an aspect of the invention, therefore, a single-piece injection-moulded rack is characterised by comprising: a plurality of spaced single-piece injection moulded rack characterised by: a plurality of spaced superposed tiers including a top tier, a bottom tier and an intermediate tier the intermediate tier being disposed between the top and bottom tiers, the top tier including apertures, the intermediate tier having a top set of bars and a bottom set of bars, bars within the top set being superposed over and intersecting bars within the bottom set to define apertures, apertures in the intermediate tier being aligned with apertures in the top tier;

first support means for interconnecting the top tier and the intermediate tier; and

second support means for interconnecting the intermediate tier and the bottom tier.

In a rack according to the invention, therefore, the intermediate tier is a lattice having apertures defined by the intersection of two sets of bars. As used herein, the term "set" is meant to encompass a group of bars and an assemblage of groups of bars. In a preferred embodiment, a top set of substantially parallel bars is superposed over a bottom set of substantially parallel bars, at right-angles, to define generally rectangular apertures. When used in reference to bars, the phrase "substantially parallel" means that the longitudinal axis of a bar is aligned parallel to the longitudinal axis of another bar (or to the longitudinal axes of other bars) or is parallel to some other reference axis or plane. This preferred configuration enables formation of the intermediate tier with as few as two mould segments. In its simplest form, each set of bars is formed by a slide which has parallel channels milled into a substantially planar surface. The two channel-containing surfaces are moved into and out of face-to-face engagement with each other along separate single axial paths which are oriented relative to one another in accordance with the desired angle of intersection of the two sets of bars. To yield the preferred lattice with rectangular apertures, the axial path of movement of the slide forming the bottom set of bars is perpendicular to the axial path of movement of the slide forming the top set of bars. Since all of the channel-containing surfaces are substantially planar, when the mould is closed, the respective surfaces mate perfectly in the regions corresponding to the apertures in the lattice. Where the channels which form the top set of bars overlap and intersect the channels forming the bottom set of bars, injected plastics material flows freely to enable single-piece construction of the lattice. Since the channels are aligned parallel to the axial path of movement of the slides, the bars which they form are likewise oriented in parallel relation to the movement of the slide. Thus, when the moulded rack has cooled, the slides are easily withdrawn from the moulded rack and away from one another along their respective single axial paths, with the channels sliding along the formed bars.

Since the lattice formed by these simply moved slides is without undercuts, it will be appreciated that a single-piece rack having more than one intermediate tier may be easily formed. For such a multiple-intermediate tier arrangement, the bars on the facing surfaces of adjacent intermediate tiers are parallel to one another and, in turn, parallel to the facing bars on the adjacent tier. For example, the top bars on a given intermediate tier are parallel to the bottom bars on the intermediate tier immediately above it, while the bottom bars thereof are parallel to the top bars on the intermediate tier immediately below it.

According to another aspect of the invention, an injection mould is provided for the manufacture of a single-piece rack having top, bottom and intermediate tiers selectively interconnected in spaced superposed relation, the intermediate tier being a lattice defined by intersecting top and bottom sets of bars, the bars within each set being substantially parallel and the top set of bars being superposed over the bottom set of bars, characterised by comprising and injection mould half and an ejection mould half, the ejection mould half being movable along a predetermined axial path relative to the injection mould half between a mould-closed position and a mould-open position and the ejection mould half cooperating with the injection mould half in the mould-closed position to define a mould cavity corresponding to the rack, wherein a first slide is associated with the injection mould half and has a lower surface portion having parallel channels corresponding in dimensions to the dimensions ·of the top set of bars of the intermediate tier and being aligned parallel to the axial path of movement of the ejection mould half; and wherein the ejection mould half includes a first core slide movable along a predetermined axial path at an angle relative to the path of movement of the ejection mould half, an upper surface portion of the first core slide including parallel channels corresponding in cross sectional dimensions to the cross-sectional dimensions of the bottom set of bars and being aligned parallel to the axial path of movement of the first core slide, the channels in the first core slide cooperating with the channels in the slides of the injection mould half to define the portion of the mould cavity corresponding to the lattice of the intermediate tier of the rack.

While the formation of the preferred configuration of superposed parallel bars has been described in relation to a single slide for each of the top and bottom sets of bars, the invention contemplates the use of plural cooperating slides to form either one or both of the sets of bars. In accordance with the preferred feature of the invention, each set of bars is formed by a pair of cooperating slides which are movable along coaxial paths in opposed directions relative to one another. Each bar is formed by a pair of channels (one channel being provided on each of the opposed slides), which made end-to-end when the mould is closed. In similar fashion to the single slide arrangement, the pairs of channels are aligned parallel to the axial path of movement of the opposed slides. Thus, when the moulded rack is cooled, the slides are withdrawn in opposed directions away from one another and away from the moulded rack, along their coaxial paths, with the channels sliding over the portions of the bars they formed. This arrangement of cooperating pairs of slides advantageously permits the formation of supports between the top and intermediate tiers and between the bottom and intermediate tiers. This is accomplished by providing channels in the mating faces of the cooperating slides. By selecting unequal lengths for the slides within a pair, the supports may be positioned where desired between the facing surfaces of the tiers. As well, by selecting the number and configuration of channels in the mating faces of the slides, a plurality of supports may be formed.

Although preferred, it is not essential for the bars within each of the sets to be parallel. For example, where a set of bars consists of groups of bars, the bars within a particular group may be parallel to one another but not necessarily parallel to the bars within another group of the set. Similarly, it is preferred but not essential for the bars within each set to extend the full length between the edges of the intermediate tier.

According to another preferred feature of the rack of the invention, to provide rigidity to the rack and to maintain simplicity in the configuration of the mould segments, the supports which join the tiers together do not extend the full vertical span from top to intermediate to bottom tier. Instead, the top tier is interconnected with the intermediate tier and, in turn, the intermediate tier is separately connected at another place to the bottom tier. In the preferred form, the top and intermediate tiers are connected at their extreme side edges by side supports whose facing inner surfaces are substantially planar and parallel to one another. With this configuration, the side supports are readily formed by side surfaces of the mould slides which form the top set of parallel bars. Similarly, the supports connecting the intermediate tier to the bottom tier have substantially planar parallel inner surfaces. By analogy with the side supports between the top and intermediate tiers, the supports between the intermediate and bottom tiers are formed by front and back side surfaces of the slides which form the bottom set of bars. Thus, in the preferred right-angle disposition of the two sets of bars forming the intermediate tier, the side supports and the front and back supports have surfaces lying in planes which are also perpendicular to one another. This arrangement not only simplifies mould design and enhances the rigidity of the rack, but also aids observation of the test tube contents from different directions.

In order that the invention can be fully understood and appreciated, the following portion of the specification describes preferred embodiments of the rack and the mould, by way of example, in conjunction with the accompanying drawings, in which:

FIGURE 1 is a perspective view of one form of rack according to the invention, in conjunction with an exploded diagrammatic perspective view of the corresponding mould according to the invention used for making the rack;

FIGURE 2 is a perspective view of a preferred form of the rack;

FIGURE 3 is a top plan view of the rack of FIGURE 2;

FIGURE 4 is a bottom plan view of the rack of FIGURE 2;

FIGURE 5 is a front elevational view of the rack of FIGURE 2;

FIGURE 6 is a left side elevational view of the rack of FIGURE 2;

FIGURE 7 is a partial cross-sectional side elevational view of the preferred mould in the closed position, showing the moulded rack;

FIGURE 8 is a view similar to FIGURE 7, showing the mould in the open position;

FIGURE 9 is a view similar to FIGURES 7 and 8, showing the mould in the full ejection position, with the rack ejected;

FIGURE 10 is a cross-sectional front elevational view of a portion of the mould taken along the line 10—10 of FIGURE 9 and illustrating in broken lines the position of the core slides when the mould is closed; and

FIGURE 11 is a right side elevational view of an alternative slant rack embodiment of the invention, showing a held test tube and its contents.

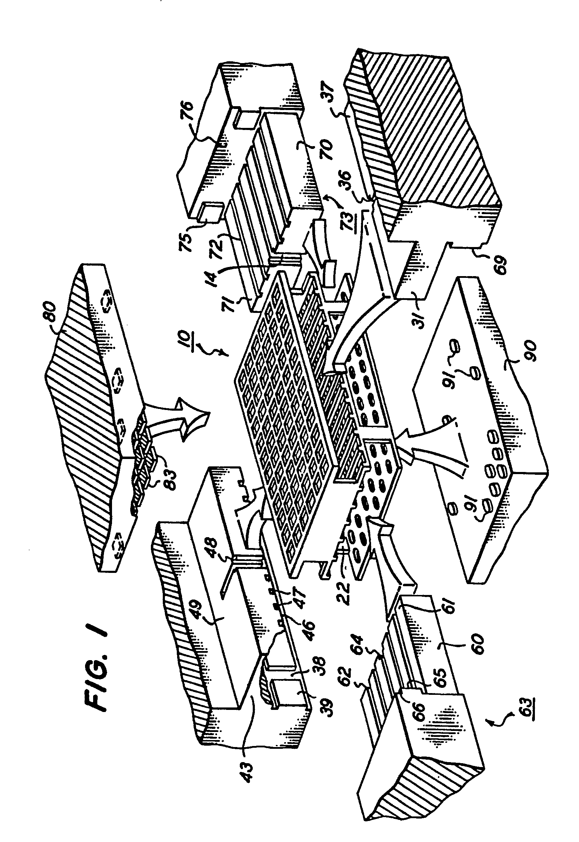

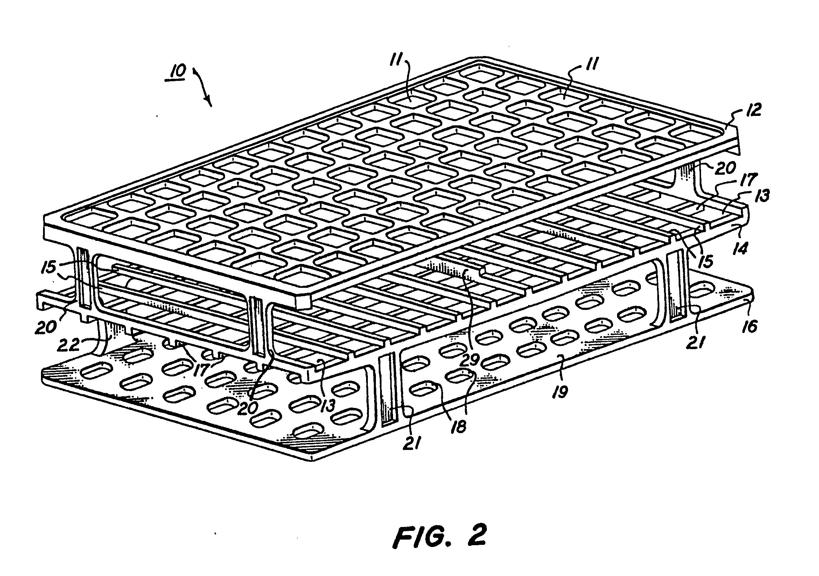

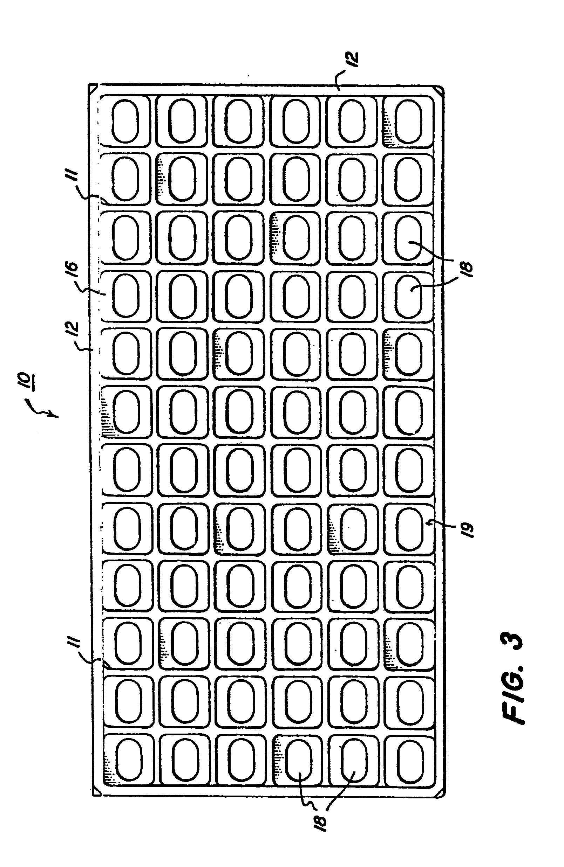

FIGURE 1 diagrammatically illustrates the relationship and relative movement among the mould segments which cooperate in the closed position to form a mould cavity corresponding to the rack 10 shown. This cooperative action can be appreciated more fully with a better understanding of the configuration of the preferred rack illustrated in FIGURE 2 and in greater detail in FIGURES 3 to 6.

To facilitate an understanding of this invention, an arbitrary directional convention has been adopted, but this convention is not intended to limit the scope of the appended claims. With this in mind, in FIGURES 1 and 2, the elongate side of the rack closest to the viewer is considered to be the front, while the shorter side of the rack closest to the viewer is considered to be the left. Thus, from these reference directions, the directions right, rear, upper and lower on both the rack and the mould follow the natural inclinations of the viewer from the given direction.

As shown in FIGURE 2, the rack includes a top tier 12, an intermediate tier 14 and a bottom tier 16, selectively interconnected in spaced superposed relation. For holding test tubes or similar articles, the top tier 12 and the intermediate tier 14 have apertures 11 and 13, respectively. These apertures 11, 13 are shaped, dimensioned, arrayed and spaced according to the type, shape and dimensions of the particular articles to be held by the rack. For holding test tubes, as preferred, especially when the tubes are to be used for a battery of related tests, it is desirable to employ a dense two dimensional array of apertures, as shown in FIGURES 2 and 3. As a result of the unique configuration of the intermediate tier 14, the provision of rectangular or square apertures is made possible, thus minimizing the thickness of the walls between adjacent apertures. When the apertures 11 are square, as illustrated, the top tier 12 is a rectangular grid having the appearance of two groups of uniformly dimensioned and spaced parallel rods, which pass through each other at right-angles.

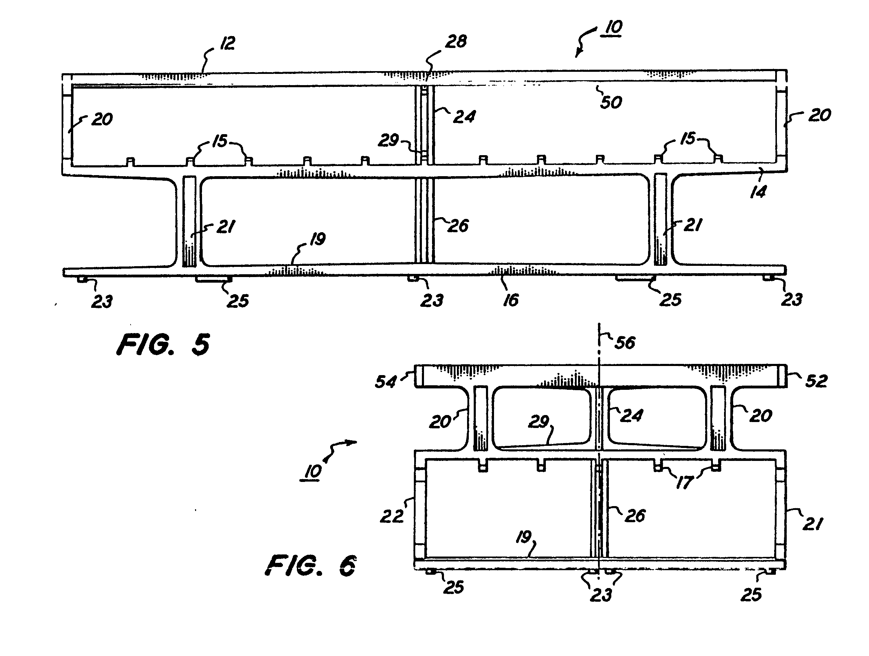

As described more fully below, the segments of the mould which form the intermediate tier 14 preferably also cooperate with additional mould segments to form the top tier 12. Generally, these mould segments are slides which, during the moulding operation, occupy what will become the space between the top and intermediate tiers 12, 14. When the moulded rack 10 has cooled, these slides must be withdrawn from this space (or the moulded rack pulled from the slide). According to one form of the mould, a single slide is employed to form a top set of bars 15 of the intermediate tier 14. The upper surface of this slide is substantially planar and has a slight draft angle to facilitate its removal. When such a single slide is employed, it will be seen that the lower surface 50 of the upper tier 12 will be substantially planar. It is preferred, however, for a pair of cooperating slides to be utilized to form the top set of bars 15 of the intermediate tier 14 and the lower surface 50 of the upper tier 12. Referring to FIGURE 6, when the mould is closed, these two slides meet at a centrally-located parting line 56. For ease of removal, a slight draft angle is provided on the upper surfaces of these two slides. When such slides are employed, the lower surface 50 of the top tier 12 has two distinct planar surfaces which taper inwardly and downwardly toward the intermediate tier 14 from the front edge 52 and back edge 54, meeting, or intersecting, at the parting line 56. Although it is preferably for these front and rear portions of the upper surface 50 of the top tier to slope downwardly and inwardly at an angle of about 0.5°—2°, if desired, the angle can be significantly larger. As described more fully below although preferred, it is not essential for the parting line 56 to be centrally located. However, whenever two or more slides are employed to form the lower surface 50 of the top tier 12, it is preferable for the formed front and rear portions of the surface 50 to include angles which will facilitate withdrawal of the slides.

Referring once again to FIGURE 2, the intermediate tier 14 is a lattice defined by intersecting sets of the top bars 15 and bottom bars 17. The bars 15 and 17 are aligned, within their respective sets, along parallel axes which lie generally within the same horizontal plane. The two sets of bars 15, 17 intersect, preferably at right-angles, to define rectangular, preferably square, apertures which precisely match the array of apertures 11 in the top tier 12, as illustrated by their hidden appearance when viewed from the top as shown in FIGURE 3. It is preferable for the bars 15, 17 to have a generally uniform rectangular cross-sectional shape, in order to provide generally planar surfaces which will permit easy sliding withdrawl of the mould segments. It is to be understood, however, that the bars may have other crosssectional shapes such as substantially circular or semicircular, square, triangular or trapezoidal, for instance. As with the apertures 11 in the top tier 12, the apertures 13 of the intermediate tier 14 can be arranged, spaced, sized and shaped differently, so as to accommodate different test tubes or articles. For example, it may at times be desirable to form the intermediate tier 14 in a fashion such that either alternate top bars 14 or bottom bars 17 are omitted, in order to permit the storing of test tubes at an angle. The preferred symmetrical correspondence of the array of apertures 11 and the array of apertures 13 is generally preferred for test tubes, in order to provide an orderly arranged and visually uncluttered assemblage of test tubes. To facilitate record-keeping, the upper surfaces of the front, back, left side and right side edges, which define the periphery of the top tier 12, may include alphanumeric inscriptions or labelling (not shown) adjacent the outer apertures, to provide row-column matrix identification of the test tubes.

In keeping with the objective of simplifying the design of the mould parts, it is preferable for the upper surfaces of the bottom bars 17 and the lower surfaces of the top bars 15 to lie generally within the same horizontal plane. As explained more fully below, but as can be understood by considering FIGURE 1, the planicity of these surfaces permits sliding, uniaxial movement of the mould components which form the top bars 15 and the bottom bars 17 of the intermediate tier 14. When more than a single mould component is used to form the bars, it may be desirable for the upper surfaces of the bottom bars 17 and the lower surfaces of the top bars 15 to lie other than within the same plane.

Referring again to FIGURE 2, the bottom tier 16 also includes an array of apertures 18 which are aligned operatively, in selective fashion, with the apertures 11 and 13 in the top and intermediate tier, respectively. By "operatively aligned" or "aligned operatively", it is meant that selected apertures in a given tier are positioned in relation to selected apertures in another tier (or in other tiers) to hold test tubes or other articles in one or more predetermined positions. The apertures 18 are here shaped with rounded ends to provide receptacles for the rounded ends of test tubes. Inclusion of apertures or receptacles in the bottom tier 16 is not essential, but is preferred to provide a more positive hold on the test tubes.

In a similar fashion to the lower surface 50 of the top tier 12, the bottom tier 16 has an upper surface 19 which may take one of several forms. For example, this surface 19 may be substantially planar, sloping slightly toward one or the other of its ends or it may have substantially planar left and right side portions which angle inwardly from the left and right side edges, respectively, and upwards toward the intermediate tier 14, intersecting at a parting line. This parting line may be located centrally or positioned toward the left or right side edge of the bottom tier 16.

The top tier 12 is connected to the intermediate tier 14 by side supports 20. In the embodiment of FIGURES 2 to 4, two side supports 20 are included on the left and right sides of the rack (left being the closest, exposed side in FIGURE 2). A single side support (as shown in FIGURE 1) or two or more side supports may be utilized, instead. The two-support arrangement of FIGURE 2 provides sufficient rigidity to the ends of the rack 10, while permitting observation of the tubes from the ends. Optionally, the space between the supports 20 may partially be filled with a tab (either depending from the top tier 12 or extending from the intermediate tier 14). Such a tab would be used to bear legends indicating, for example, hazardous contents in the test tubes or the manufacturer's identification.

Although preferred, it is not essential for the top and intermediate tiers 12, 14 to be connected at their left and right side edges. Thus, for example, interconnection of these tiers could be accomplished by one or more supports positioned inwardly from either or both of the left and right side edges of the tiers. Thus, in simplest form, the top and intermediate tiers may be interconnected by a single support which can be located at aligned edges of the two tiers, inwardly of the edges of both tiers, or extending from the edge of one tier to a position inward of the edges of the other tier. As will be discussed more fully hereinafter, it is not essential for the three tiers to have substantially the same peripheral shape and dimensions or that the edges of the tiers be aligned substantially coplanar. In such instances, the side supports 20 (whether located at the edges or inward therefrom) may have a configuration and alignment other than that shown in FIGURE 2. For example, if the left side edge of the intermediate tier 14 were extended outward relative to the left side edge of the top tier 12, the side supports 20 could either slope smoothly downward and outward or follow a sharp S-curve downward and outward from the top to the intermediate tier.

It will thus be seen that a wide variety of means may be provided for interconnecting the top and intermediate tiers. Again, in keeping with the goal of simplifying the design of the mould, it is preferable for the side supports 20 to be arranged so that they may easily be formed by the side surfaces of the slide (or slides) which form(s) the top bars 15 of the intermediate tier 14. Since these slides are withdrawn along an axis which is aligned parallel to the axes of the top bars 15, it is preferred for the side supports 20 to have their inner surfaces aligned parallel with the axes of the top bars 15, so that the slides may also be easily withdrawn along these inner surfaces. In similar fashion to the formation of the lower surface 50 of the top tier 12 and the upper surface 19 of the bottom tier 14, the inner surfaces of the side supports 20 may have either substantially planar inner surfaces or substantially planar front and rear surface portions which intersect at a parting line. Where the side supports 20 are located inwardly of the edges, it may be desirable for both the inner and outer surfaces thereof to be aligned with the axial path of movement of the slides which form them. In all arrangements which utilize the slides forming the bars 15 also to form the side supports 20, it is essential only that the supports be formed without undercuts.

The intermediate tier 14 is connected to the bottom tier 16 by two front supports 21 and two rear supports 22, only one of which is shown in FIGURE 2. Although not essential, the front and rear supports (and the side supports 20) may include vertical ribs for added strength and may have radiused or bevelled corners for internal strain relief. In the preferred configuration of FIGURE 2, the front supports 21 and the rear supports 22 connect the front and rear edges, respectively, of the intermediate and bottom tiers 14, 16. The outer edges of both pairs of supports are aligned substantially coplanar with the edges of the tiers which they connect. It will be appreciated from the preceding description of the side supports 20 that the front supports 21 and rear supports 22 may have a wide range of configurations. Thus, there may be one or more supports at the front or rear edges, one or more supports located inward of the front and rear edges of the bottom and intermediate tiers, or a combination of supports at the edges and inward of the edges. Since it is preferable for the slide or slides which form the bottom bars 17 also to assist in forming the front and rear supports 21 and 22, it is also preferable for the inner surfaces of the supports 21 and 22 to be aligned with the axial path of movement of the slides. As shown in FIGURE 6, in the preferred form of the rack, the inner surfaces of the supports 21 and 22 have substantially planar inner surfaces which are aligned substantially parallel to the axes of the bottom bars 17.

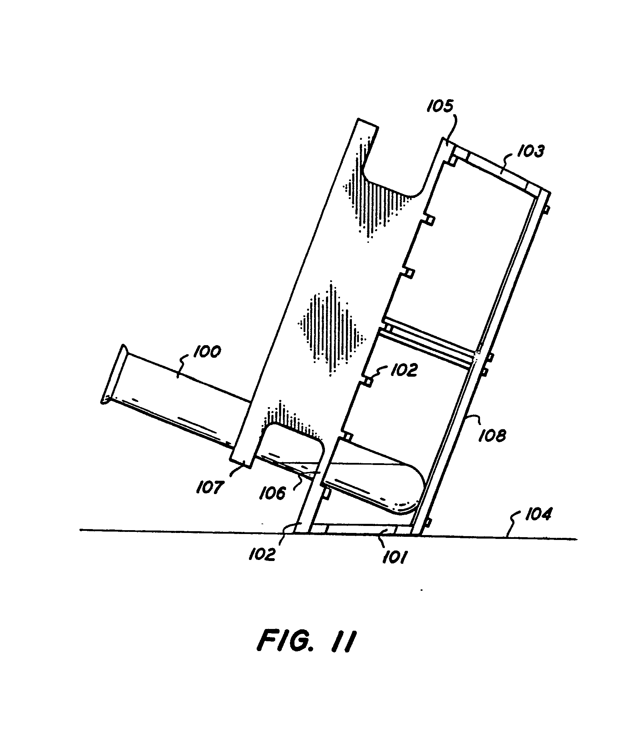

Referring to FIGURE 11, an example of a modified rack is shown, in which the front support 101 has an inner surface which is not aligned parallel to the bottom bars 102, but is aligned with the axis of the slide, (which slide is operatively withdrawn outward toward the viewer). In this modified form, the rack is used as a slant rack for holding test tubes and their contents at a predetermined angle (one such tube 100 and its contents are shown). As illustrated, the modified intermediate tier 106 extends outward relative to the top tier 107 and the bottom tier 108 (both of which are substantially unmodified). Either the entire front edge of the intermediate tier 106 or a portion thereof (for example, a post) may form the outward extension. In either of these arrangements, it is preferable for the support 101 to extend from the front edge of the bottom tier 108 at an angle outward to the extension 102 of the intermediate tier 106. In this preferred construction, the front surface of the support 101 provides a stable surface for supporting the rack, when tilted, on a table or other surface 104, as shown in FIGURE 11. The invention is particularly well suited to providing a range of slant angles, the approximately 20° angle shown in FIGURE 11 being one such example. A close examination of FIGURE 11 reveals that the intermediate tier 106 also has a rear extension 105 which projects outward from the bottom and top tiers. The rear support 103, which connects the extension 105 to the rear edge of the bottom tier 108, is inclined at an angle of about 5°. Thus, when the rack is tilted on to the outer surface of the rear support 103, the test tubes 100 and their contents are oriented at about 5°. Again, it is preferred, but not necessary, for the support 103 to extend between the outside edges of the extension 105 and the bottom tier 16. For example, either the support 103 or the support 101 could instead extend at right-angles relative to the intermediate and bottom tiers.

As suggested by the modified rack of FIGURE 11, the invention is well suited to provide multitier racks having a variety of configurations. The arrangement of the top and bottom sets of bars advantageously permits the placement of interconnecting supports at various locations along and within the edges of the tiers. Although the invention has been described in relation to a three-tiered structure, having substantially parallel tiers with the same general rectangular periphery and having edges which are aligned substantially coplanar, the invention encompasses a broad range of shapes, dimensions and alignments of the tiers. Although the arrangement of the preferred rack of FIGURES 1 to 6 is particularly helpful in simplifying the design of the mould which forms it, it may be desirable to absorb the added cost of a more complex mould in order to configure the rack other than as illustrated. For example, it may be desirable to extend one or more of the edges (or only a portion thereof) of one or more of the tiers. In such instance, the edges of the tier or tiers, so extended, would have other than a coplanar alignment with the edges of the other tiers. By way of an additional example, it is also not necessary for the tiers to be generally parallel or horizontal. Thus, any of the tiers, including the intermediate, may be arranged at an angle relative to any of the other tiers.

Although the invention has been described in relation to the preferred rack and in terms of the arbitrary directional convention adopted therefor, it is to be understood that the inventive concepts broadly cover a rack having a plurality of spaced selectively interconnected tiers, at least one intermediate tier of which has a top set of bars and a bottom set of bars. Importantly, it is not essential for the bars within each set to be parallel to one another or for such bars to extend the full distance between the edges of the intermediate tier. Thus, for example, either or both of the top and bottom sets of bars may consist of groups of bars, the bars within each group being substantially parallel to one another. Although the configuration of the intermediate tier with such groups of parallel bars would complicate mould design, it would provide a greater variety of configurations for the apertures within a given rack and, hence, provide a means for holding or grouping test tubes or other articles having divergent shapes. Since the individual bars within a given group within the top set of bars would not necessarily overlap each of the bars within the bottom set (or groups of bars within the bottom set), there would be only selective intersection and superposition of the various bars. That is to say, only selected bars within the top set would be superposed over and intersect with selected bars within the bottom set to define the apertures.

An important aspect of any such arrangement is that the bars making up the lattice of the intermediate tier contain no undercuts. In the context of this disclosure, undercuts mean protrusions which will prevent the withdrawal of the mould segments which form the components of the rack. Although the invention is intended to encompass any single-piece injection moulded rack, the intermediate tier of which has selectively superposed and intersecting top and bottom sets of bars, it is preferable for there to be no undercuts in the lattice of the intermediate tier in order to enable its formation with slides which move uniaxially.

As shown most clearly in FIGURES 5 and 6, further strengthening of the rack is obtained by including an upper spacer or column 24 extending between the top and intermediate tier and a lower spacer 26 extending between the intermediate tier and the bottom tier. While the spacers 24 and 26 may have a variety of cross-sectional shapes, such as circular, square, triangular or even a long thin rectangular plate, which would give the appearance of a wall, the illustrated spacers resemble a cross in section and, accordingly, exhibit good rigidifying strength. For added structure strength, the top tier optionally includes a gusset 28 which depends from the lower surface 50 and extends frontward and rearward from the spacer 24, spanning a portion of the frong-to-rear dimension of the surface 50. While only one centrally located gusset 28 is shown in FIGURE 5, it may be desirable to include more than one such gusset at spaced intervals along the lower surface of the top tier. As illustrated in FIGURE 2, a gusset 29 may also be optionally provided, upstanding from one or more of the top bars 15. When so provided, the gusset 29 as well as the central gusset 28 may be formed as outward extensions of the upper spacer 24.

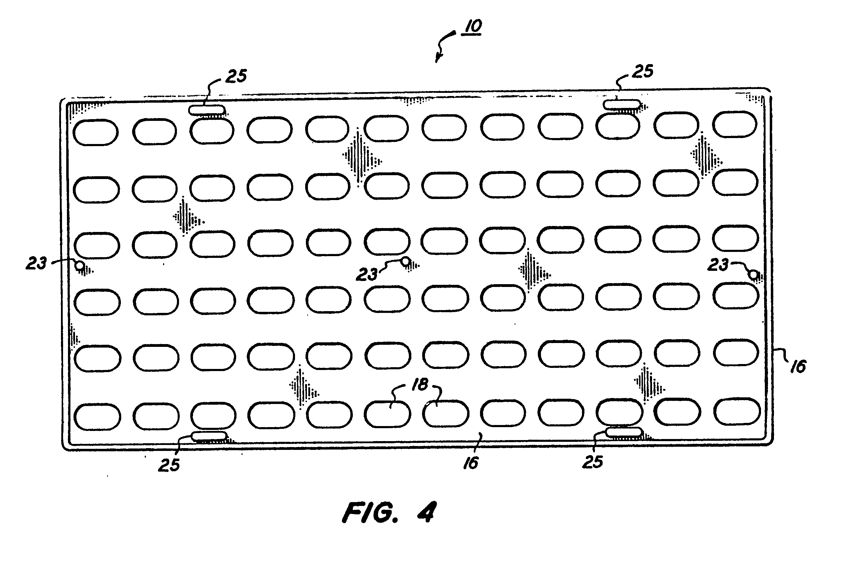

As shown in FIGURE 4, posts 23 and elongated feet 25 may optionally be included on the lower surface of the bottom tier 16. In addition to elevating the rack, the posts and spacers may be advantageously shaped and positioned to provide an interlocking fit with the apertures 11 in the top tier of another rack for stacking purposes.

The rack in accordance with the invention can be made from any suitable injection moulding material, such as, for example, polyethylene, polypropylene, polystyrene, high-impact polystyrene, polycarbonate, polyamides, polyacetals and polyurethane. The injection moulding material can also contain fillers, for instance glass fibres, carbon black, carbon fibres, boron fibres, silica or titanium dioxide. Glass fibres are a preferred filling material.

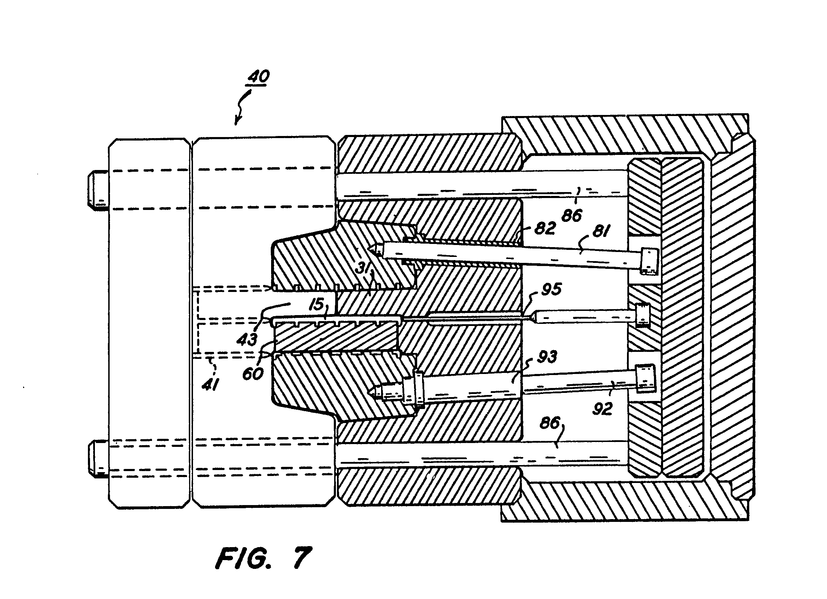

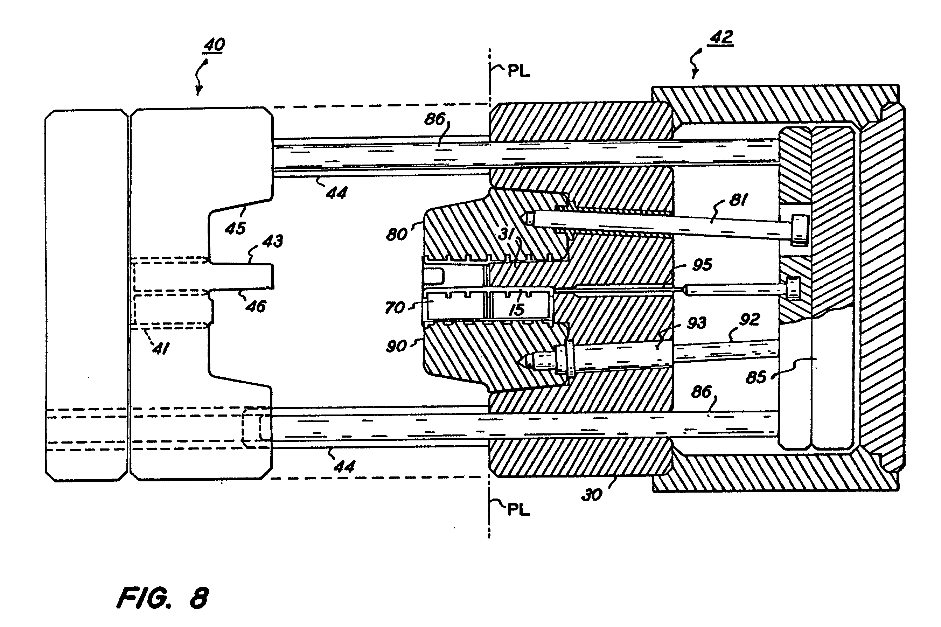

FIGURES 7, 8 and 9 illustrate, in partial cross-sectional side elevation, the mould components and the sequential operation thereof to produce the rack. As noted earlier, FIGURE 1 diagrammatically illustrates the movement and relationship of these components and will be referred to in order to facilitate an understanding of the more detailed views of FIGURES 7 to 9. As an aid in understanding this mould, certain features of the mould have been simplified or not shown. As well, for purposes of clarity, some sectional portions of the mould (and the moulded rack in FIGURES 7 and 8) have not been cross-hatched. Also, since the gating methods and techniques for introducing the molten plastics material into the mould are conventional, they are not shown or described in detail herein. Preferably, a three-plate runner mould system is employed, although other systems may be used. Also, the mould may be readily adapted for use in a wide variety of injection moulding machines which operate in either a vertical or horizontal manner and with any suitable injection mouldable material. FIGURES 7 to 9 illustrate the preferred disposition of the mould in a horizontal-type injection moulding machine.

Referring initially to FIGURE 8, the mould includes a stationary, or injection, half 40 and a movable, or ejection, half 42. The ejection half 42 is movable along an axial path determined by four parallel leader pins 44 which are slidably journalled in bores located adjacent the corners of the mould. Movement of the ejection half 42 along the leader pins 44 between the mould-open position of FIGURE 8 and the mould-closed position of FIGURE 7 is controlled by means of a conventional hydraulic apparatus, not shown. The distance travelled by the ejection half 42 is somewhat foreshortened in the FIGURES, but is preferably about two to two-and-one-half times the dimensions of the moulded rack, so as to facilitate its ejection.

The injection half 40 includes a runner system 41 through which plastics material is introduced into each of the portions of the mould cavity which form the three tiers. A rear slide 43 projects outwardly from a cavity 45 of the injection half 40. The lower surface 46 of the rear slide 43 is substantially planar and aligned generally parallel to the axial path of movement of the ejection half 42. As shown in FIGURE 1, channels 47 are milled into the lower surface 46 of the rear slide 43. These channels 47 correspond in cross-sectional dimension to the cross-sectional dimension of the top bars 15 of the rack 10 and in length to a predetermined portion of the overall length of the top bars 15. The channels 47, i.e., the longitudinal axes thereof, are aligned parallel to the axial path of movement of the ejection mould half 42. This alignment is illustrated in FIGURE 1 where the path of movement of the ejection half 42 is in the direction of the arrow extending from the rear slide 43 into the space between the top and intermediate tiers 12, 14 of the rack 10. It is to be understood that this arrow, as well as the other arrows in FIGURE 1, illustrate the relative (not necessarily actual) movement between the rack 10 and the parts of the mould which form it. For example, during the mould-opening operation, the rear slide 43 (as part of the injection mould half 40) remains stationary, while the ejection half 42 (and the still captive moulded rack 10) are moved in the direction of the arrow just mentioned. The remaining components in FIGURE 1, which will be identified and described in detail hereinafter, are part of the ejection half 42 of the mould. Briefly, these elements are a front slide 31, a left core slide 60, a right core slide 70, an upper slide block 80, and a lower slide block 90.

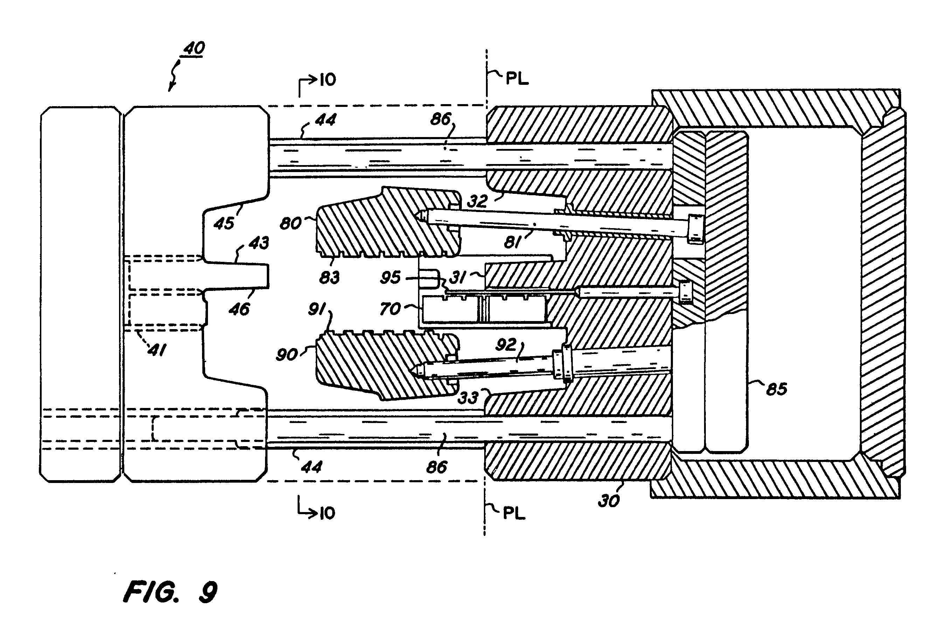

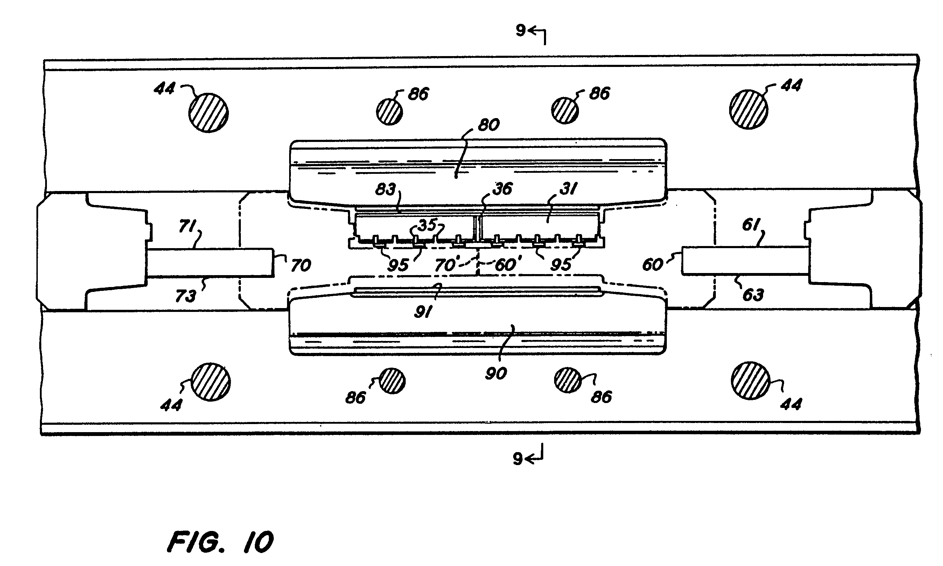

As seen best in FIGURE 9, the front slide 31 is formed as part of a retainer block 30 and is flanked by an upper cavity 32 and a lower cavity 33. In the mould-closed position, the front slide 31 cooperatively engages the rear slide 43 in face-to-face relation to define the portion of the mould cavity which forms the top bars 15 of the intermediate tier 14. To form this portion of the cavity, the lower surface 34 of the front slide 31 (see FIGURE 10) includes parallel channels 35 which, in identical fashion to the channels 47 of the rear slide 43, correspond in cross-sectional dimensions to the cross-sectional dimensions of the top bars 15. When the front and rear slides are engaged in the mould-closed position, the channels 35 in the front slide 31 mate end-to-end with the channels 47 of the rear slide 43 to form channels which correspond in length to the desired length of the top bars 15. While the bar length-determining function may be apportioned between the front and rear slides 31, 34, as discussed below, it is preferred for each of these slides to form half of the top set of bars 15. Similarly, the longitudinal axes of the channels 35 are parallel to one another and to the axial path of movement of the ejection half 42 of the mould. The axes of the channels 35 lie within a plane substantially parallel to the plane of the lower surface 34. As indicated in FIGURE 1, it is preferable for the front slide 31 and the rear slide 43 to be mirror images of one another and to engage along a parting line which runs centrally through the cavity which forms the rack 10 (which corresponds with the parting line 56 on the rack, as shown in FIGURES 5 and 6). This parting line 56 is coincident with the parting line between the retainer block 30 and the injection half 40 and is indicated by the line labelled PL in FIGURES 8 and 9. It is to be understood that the front and rear slides 31, 43 may be arranged to engage along a parting line which is not centrally located and, instead, is oriented in a plane which lies other than generally perpendicular to the direction of movement of the ejection half 42. For example, the mating faces of the front and rear slides 31, 43 may be oriented in planes which are parallel to one another but at an angle relative to the path of movement of the ejection half 42. In such instances, adjacent channels on each slide 31, 43 would gradually increase in length from a shortest channel to a longest channel. When the two slides are engaged, the shortest channel of one slide would mate with the longest channel of the other slide in progressive fashion. Alternatively, the engaging faces of these slides could be inclined toward one another so that the upper surfaces engage at a parting line which is offset (either to the front or to the rear) from the parting line of the lower surfaces.

As mentioned above, in a preferred form, the front and rear slides 31, 43 each form half of the cavity corresponding to the top set of bars 15. Advantageously, the central engagement of the front and rear slides 31, 43 permits the inclusion of vertical channels 48 and 36 which cooperatively form the portion of the mould cavity corresponding to the upper spacer 24 of the rack 10.

The upper surface 49 of the rear slide 43 and the upper surface 37 of the front slide 31 are each substantially planar and cooperate with the upper slide block 80 to form the portion of the mould cavity corresponding to the top tier 12 of the rack 10. To facilitate separation of the moulded rack 10 from the front and rear slides 31, 43, the surfaces 49 and 37 preferably include a draft angle which tapers inwardly and downwardly toward the parting line 56, PL, i.e., toward the respective engaging faces of the rear and front slides 31, 43. The draft angles are preferably slight, from about 0.5° to 2°, in order to provide a generally planar appearance to the lower surface 50 of the top tier 12. In actuality, however, the presence of these draft angles moulds distinct planar front and rear portions of the lower surface of the top tier 12. If desired, of course, a much larger draft angle could be utilized.

To form a gusset 28 (FIGURE 5) on the underside of the top tier 12, the upper surface 37 of the front slide 31 and the upper surface 49 of the rear slide 43 contain milled grooves or channels 36, 48, as shown in FIGURE 1, which dimensionally correspond to the desired dimensions of the gusset 28. If more than one gusset is desired, additional channels may be provided on these two surfaces 37, 49. In similar fashion to the channels 47 which form the top bars 15, the channels which form such gussets 28 are aligned parallel to the axial path of movement of the ejection mould half 42, so that the front and rear slides 31, 43 may be slidingly separated from the moulded gussets.

It will be appreciated that, rather than the single vertical channels 36 and 48, the front slide 31 and rear slide 43 could optionally include on their engaging faces plural channels to form multiple upper spacers or, if desired, a single solid support which spans the entire length of the top and intermediate tiers 12, 14. Various ways of providing such alternative spacers and also of including rigidifying and stress-relieving features therefor will be apparent to those skilled in the art. It will be further appreciated that, rather than the symmetrical arrangement of the front slide 31 and rear slide 43, a single slide could be used to form the top bars 15. Such a slide would include channels which span the entire front-to-rear length of the upper bars 15. The employment of such a slide would, however, not permit the formation of centrally-located spacers between the top and intermediate tiers 12, 14.

The left core slide 60 and the right core slide 70 cooperate in similar fashion to the front and rear slides 31, 43 to help form the bottom bars 17 of the intermediate tier 14. As seen most clearly in FIGURE 1, the upper surfaces 61 and 71 of the left and right core slides 60, 70, respectively, include parallel channels 62 and 72, respectively, which mate end-to-end to define the portion of the mould cavity corresponding to the bottom bars 17. These channels 62, 72 correspond in cross-sectional dimension to the cross-sectional dimension of the bottom bars 17 and in length to predetermined portions of the overall length of the bars 17. To permit separation of these slides 60, 70 from the moulded rack 10, the channels 62, 72 are arranged with their longitudinal axes parallel to the axial paths of movement of the core slides 60 and 70. Preferably, the core slides 60, 70 are movable along coaxial paths in opposed directions relative to one another and at right-angles to the axial path of movement of the ejection half 42. If it is desired to form a rack having top and bottom sets of bars which intersect other than at right-angles, then the axial paths of movement of the core slides 60, 70 would be oriented at some other angle relative to the axial path of movement of the ejection half 42. As shown in FIGURE 10, the core slides 60 and 70 move from their respective closed positions 60' and 70', shown in chaindotted lines, to their open positions, shown in solid lines, in which these slides 60, 70 are fully away from the moulded rack (not shown in FIGURE 10). In viewing FIGURE 10 in relation to FIGURES 7, 8 and 9, it is helpful to note that, because of the direction of view and the arbitrarily adopted directional convention, the right core slide 70 appears on the left in FIGURE 10, while the left core slide 60 appears on the right. Also, in the mould-closed position of FIGURE 7, the section is taken through the left core slide 60, while, in FIGURES 8 and 9, the left core slide 60 has been removed from view by virtue of the section (line 9—9 in FIGURE 10). Since the right core slide 70 has been omitted from FIGURES 8 and 9, the viewer is looking at the face of this slide in these figures (a portion of this face being hidden by the yet-to-be-ejected rack 10 in FIGURE 8).

Again, in analogous fashion to the provision of substantially planar upper surfaces on the front and rear slides 31, 43, the lower surfaces 63, 73 of the left and right core slides 60, 70 are each substantially planar, but not necessarily coplanar with one another. To permit separation of the core slides from the moulded rack 10, a slight draft angle is also preferably provided for the lower surfaces 63 and 73. Thus, the surfaces 63 and 73 each taper inwardly and upwardly toward the parting line of the left and right core slides 60, 70.

From FIGURE 1, it will be seen that these lower surfaces 63 and 73 cooperate with the lower slide block 90 to form the bottom tier 16, the apertures therein being formed by projecting pin cores 91. The upper surface 19 of the bottom tier 16 formed by the lower surfaces 63 and 73 has distinct, substantially planar, left and right portions which intersect at the centrally-located parting line. When the preferred draft angle of from about 0.5° to 2° is provided, the slight deviation of the moulded surface 19 from a true plane is discernable only upon close inspection. Of course, if desired, larger draft angles may be used. Rather than the pair of cooperating core slides 63 and 73, a single slide may be employed to form the bottom bars 17 of the intermediate tier 14 and the upper surface 19 of the bottom tier 16. The lower surface of such a single slide would also include a draft angle to permit facile separation from the upper surface 19 of the bottom tier 16.

To form the preferred centrally-located lower spacer 26 of the rack 10, the engaging faces of the left and right core slides 60, 70 include vertical channels 64 and 74, respectively, which mate in the mould-closed position. Rather than the single vertical channels 64 and 74, the left and right core slides 60, 70 could optionally include on their engaging faces plural channels to form multiple lower spacers or, if desired, a single solid wall-like support which spans the entire front-to-back width of the intermediate and bottom tiers 14, 16. It will be appreciated by those skilled in the art that the number, configuration and positioning of these spacer-forming channels may be varied greatly. In the preferred rack, the bottom tier 16 has sufficient rigidity so that additional gussets are not needed. It will be understood, however, that it may be desirable with a less rigid configuration of the bottom tier 16 to include gussets on its upper surface 19. In similar fashion to the formation of the gusset 28, such gussets for the bottom tier 16 may be formed by suitably milling channels into the lower surfaces 63 and 73 of the core slides, either as extensions of the channels 64 and 74 or as separate channels. As with the front and rear slides 31, 43 the left and right core slides 60, 70 may have unequal lengths, so that their respective channels form unequal lengthwise portions of the bottom bars 17. As well, the engaging faces of the core slides 60, 70 may meet in a plane which is inclined at an angle relative to the coaxial paths of movement of these two slides. Additionally, the engaging faces of these two slides 60, 70 may be inclined toward one another so that the upper surfaces 61 and 71 engage at a parting line which is offset (either to the left or to the right) from the parting line of the lower surfaces 63 and 73. A similar arrangement may, of course, be employed for the front and rear slides 31 and 43. To form the side supports 20 between the top and intermediate tiers 12, 14, the left and right core slides 60, 70 include vertical surface portions 65 and 75, respectively, which have milled side channels 66 and 76, respectively, as shown best in FIGURE 1. When the mould is closed, the right side channel 76 cooperates with the right side surface portions 75 of the front and rear slides 31, 43, respectively, to form the portion of the mould cavity corresponding to the right side support 20. Similarly, the left side channel 66 cooperates when the mould is closed with the left side surface portions 65 of the front and rear slides 31, 43 to form the portion of the mould cavity corresponding to the left side support 20 of the rack 10. It will be recalled that the FIGURE 1 embodiment of the rack 10 includes a single side support 20, for purposes of clarity in this FIGURE. For the preferred mould, which produces the rack 10 of FIGURE 2, the surfaces 65 and 75 would have a pair of channels corresponding to the two side supports 20 on each of the left and right sides of the rack 10. It can be seen that a wide variety of configurations for the side supports 20 may be provided by altering the vertical surfaces 75 and 65 of the two core slides 60, 70. As well, the side supports 20 may be positioned inwardly from the side edges, by altering the surfaces 65 and 75 of the core slides 60, 70 and the respective side surfaces of the front and rear slides 31, 43 with which they engage. For example, by providing a projection from the surface 75 and by suitably altering the right side surfaces of the front and rear slides, 31, 43, the right side support 20 may be moved inward from the right side edges of the top and intermediate tiers 12, 14. By arranging the surfaces 65 and 75 at an angle other than the generally vertical angle indicated in FIGURE 1, the side edges of the intermediate tier 14 may be moved outward relative to the side edges of the top tier 12. Such a reconfiguration would, of course, also incline the side supports 20 at an angle. Those skilled in the art will appreciate that many such modifications may be made, subject only to the general requisite that undercuts on the inner surfaces of the left and right side supports 20 should be avoided, in order to permit withdrawal of the front and rear slides 31, 43.

The front and rear supports 21 and 22, respectively, are formed in an analogous fashion by channels which are formed in vertical surface portions 39 and 69, respectively, of the rear and front slides 43, 31, respectively. Only one channel 38 on the rear slide 43 is clearly seen in FIGURE 1, it being appreciated that there is a pair of channels in this surface, as well as a pair of channels in the surface portion 69 of the front slide 31. In identical fashion to the surfaces of the left and right core slides 60, 70 which form the side supports 20, the vertical surface portions of the front and rear slides 31, 43 which contain the channels 38 may be variously configured to provide a wide variety of front and rear supports such as 21, 22. For the preferred arrangement shown, and for all such modifications, the vertical surface portion 39 of the rear slide 43, which contains the channel 38, cooperates when the mould is closed with rear surface portions of the left and right core slides 60, 70, while the vertical surface portion 69 of the front slide 31, which contains the channels 38 (which are not seen) cooperates when the mould is closed with front surface portions of the left and right core slides 60, 70. It will be seen that one such modification would provide a mould for forming the modified rack of FIGURE 11. Although not illustrated in FIGURE 1, it will be understood that the channels which form the front and rear supports are preferably configured to give the front and rear supports 21, 22 illustrated in FIGURE 2.

Referring to FIGURES 7 and 8, the upper slide block 80 and the lower slide block 90 are releasably held within the upper cavity 32 and lower cavity 33, respectively, of the retainer block 30. These slide blocks 80, 90 remain seated in the retainer block 30 while the ejection half 42 moves from the mould-closed position of FIGURE 7 to the mould-open position of FIGURE 8. To permit separation of the upper and lower slide blocks 80, 90 from the moulded rack 10 (see FIGURE 8), the upper slide block 80 and the lower slide block 90 are movable relative to the retainer block 30 along paths determined by an upper angular ejector pin 81 and a lower angular ejector pin 92, respectively. Both the upper and lower angular ejector pins 81, 92 are slidably journalled in respective bores disposed at an angle with respect to the axial path of movement of the ejection mould half 42. Journalling of the angular ejector pins 81, 92 is accomplished with the aid of an upper boss 82 and a lower boss 93. The angular ejector pins 81, 92 are secured at their forward ends within the upper slide block 80 and the lower slide block 90, respectively. At their rearmost ends, the angular ejector pins 81, 92 are conventionally secured in T bushings, to permit vertical travel of the ends when the ejector pins 81, 92 are driven forward through the angular path in the retainer block 30. The sequence of movement of the angular ejector pins 81 and 92 is shown in FIGURES 8 and 9. From the mould-open position of FIGURE 8, the angular ejector pins 81, 92 are driven forward by the forward travel of an ejector box 85, which travels along a path determined by leader pins 86 (preferably four, as shown in FIGURE 10). This technique for ejecting the angular pins 81, 92 and the construction of the ejector box 85 are conventional and, accordingly, will not be described in detail.

Upon completion of the travel of the angular ejector pins 81, 92 the upper slide block 80 and lower slide block 90 are displaced away from one another and away from the moulded rack 10. In reaching this fully open, or ejection, position, the two slide blocks 80, 90 follow the angular path defined by the bores through the retainer block 30. This action withdraws the projecting pin cores 91 from the apertures formed in the bottom tier 16 of the rack 10 and also pulls the projecting pin cores 83 from the apertures formed on the top tier 12 of the rack 10. As will be seen most clearly in FIGURE 1, the projecting pin cores 83 on the upper slide block 80 cooperate with the upper surfaces 37 and 49 of the front and rear slides 31, 43, respectively, to define the portion of the mould cavity corresponding to the upper tier 12. Similarly, the projecting pin cores 91 on the lower slide block 90 cooperate with the lower surfaces 63 and 73 of the left core slides 60 and 70, respectively, to define that portion of the mould cavity corresponding to the bottom tier 16 of the rack 10.

To strip the moulded rack 10 from its engagement with the front slide 31, plural ejector blades 95 are slidably journalled in the retainer block 30 in conventional fashion and these ejector blades 95 are activated by the ejector box 85 simultaneously with the angular ejection of the upper and lower slide blocks 80, 90. The ejector blades 95 engage the moulded rack 10 at points spaced along the front edge of the intermediate tier 14. In FIGURE 9, it must be observed again that the face of the right core slide 70, which is visible and appears to be disposed beneath the ejector blade 95, is, in fact, displaced backward from the plane of the FIGURE and, hence, completely away from the moulded rack 10. This relative position is shown in FIGURE 10. To obtain this action, the sequence of mould opening and ejection is as follows. First, the mould is fully opened to the position shown in FIGURE 8. Then the left core slide 60 and the right core slide 70 are withdrawn by conventional hydraulic apparatus (not shown). Thereafter, the upper slide block 80 and the lower slide block 90 are cammed off by the action of the angular ejector pins 81, 92 and the moulded rack 10 is ejected by the action of the ejector blades 95, all of which are actuated simultaneously by the ejector box 85.

Although the mould has been described in its preferred embodiment, for the formation of the preferred embodiment of a three-tiered rack for holding test tubes, it is to be understood that the inventive concept embraces a mould for forming a single-piece rack having more than three tiers. For example, the top tier 12 of the rack illustrated in FIGURE 1 could easily be formed as a second intermediate tier by first providing bottom bar-forming channels in the upper surfaces 49 and 37 of the rear and front slides 31, 43. A top set of bars would then be formed over this bottom set of bars by stacking an additional core slide (or a pair of core slides) over the left and right core slides 60, 70. To form the top bars on this second intermediate tier, this additional slide or slides would have channels milled in the lower surface or surfaces. The top tier above this intermediate tier could be formed, for example, by a cooperative arrangement similar to the cooperative action of the upper slide block 80 and the upper surfaces 37 and 49 of the front and rear slides.

It is also to be appreciated that the number of slides may be increased and oriented at various angles relatively to one another and suitably channelled to provide a wide variety of configurations to the intermediate tier 14. Such additional slides, or even the slides shown, may also be modified to provide other than a rectangular periphery for one or more of the tiers. Such modifications may be particularly desirable where the mould is to be used to provide a rack to be used for purposes other than holding test tubes. For example, such modifications may be useful in packaging, storage and shipping various kinds of containers for liquids and the like.

**Claims**

1. A single-piece injection moulded rack (10) characterised by:

a plurality of spaced superposed tiers (12, 14, 16) including a top tier (12), a bottom tier (16) and an intermediate tier (14), the intermediate tier being disposed between the top and bottom tiers, the top tier including apertures (11), the intermediate tier having a top set of bars (15) and a bottom set of bars (17), bars within the top set being superposed over and intersecting bars within the bottom set to define apertures, apertures in the intermediate tier being aligned with apertures in the top tier;

first support means (20) for interconnecting the top tier and the intermediate tier; and

second support means (21) for interconnecting the intermediate tier and the bottom tier.

2. A rack according to claim 1, wherein each of the tiers includes a peripheral portion defining edges, the edges of the top tier being aligned with the edges of the intermediate tier and the edges of the intermediate tier being aligned with the edges of the bottom tier, and wherein the first support means (20) interconnect a portion of the edges of the top tier and a portion of the edges of the intermediate tier; and the second support means (21) interconnect a portion of the edges of the intermediate tier and a portion of the edges of the bottom tier.

3. A rack according to claim 1, wherein each of the tiers includes a peripheral portion having opposed first and second edges and opposed third and fourth edges; the first, second, third and fourth edges of the top tier being aligned with the first, second, third, and fourth edges, respectively, of the intermediate tier; and wherein the first, second, third, and fourth edges of the intermediate tier are aligned with the first, second, third, and fourth edges, respectively, of the bottom tier, and wherein the first support means are located inwardly from the respective edges of the top and intermediate tiers.

4. A rack according to claim 1, wherein each of said tiers includes a peripheral portion having opposed first and second edges and opposed third and fourth edges; the first, second, third, and fourth edges of the top tier being aligned with the first, second, third and fourth edges, respectively, of the bottom tier, and wherein the second support means (21) are located inwardly from the respective edges of the intermediate and bottom tiers.

5. A rack according to claim 4, wherein the first support means is located inwardly from the respective edges of the top and intermediate tiers.

6. A rack according to any preceding claim, wherein the top set of bars comprises groups of bars, the bars within each group being substantially parallel.

7. A rack according to any preceding claim, wherein the bottom set of bars comprises groups of bars, the bars within each group being substantially parallel.

8. A rack according to any preceding claim, wherein the top and bottom bars extend between edges of the intermediate tier.

9. A rack according to any preceding claim, wherein each bar of the top set intersects each bar of the bottom set at substantially right-angles.

10. A rack according to claim 3, wherein:

each of the bottom bars of the intermediate tier has a substantially planar upper surface; and each of the top bars of the intermediate tier has a substantially planar lower surface.

11. A rack according to claim 10, wherein the upper surfaces of the bottom bars are substantially coplanar with one another.

12. A rack according to claim 10 or 11, wherein the lower surfaces of the top bars are substantially coplanar with one another.

13. A rack according to claim 1, wherein each of the tiers includes a peripheral portion having opposed first and second edges and opposed third and fourth edges; the first, second, third, and fourth edges of the top tier being aligned with the first, second, third and fourth edges, respectively, of the intermediate tier; and wherein the first, second, third, and fourth edges of the intermediate tier are aligned with the first, second, third and fourth edges, respectively of the bottom tier, and wherein: the bars of said top set extend between the first and second edges of said intermediate tier, and the bars of said bottom set extend between the third and fourth edges of said intermediate tier.

14. A rack according to claim 1, wherein the first support means comprises:

a support (20) interconnecting the first edge of the intermediate tier and the first edge of the bottom tier and a support (21) interconnecting the second edge of the intermediate tier and the second edge of the bottom tier.

15. A rack according to any preceding claim, further including at least one upper spacer extending between the top tier and the intermediate tier, the upper spacer being positioned inwardly of the edges of the tiers; and further including at least one lower spacer extending between the intermediate tier and the bottom tier, the lower spacer being positioned inwardly of the edges of the tiers.

16. A rack according to claim 13, wherein the top tier includes a lower surface having first and second portions, the first and second portions each being substantially planar but not coplanar with each other, the first and second portions intersecting at a parting line located inward from the first and second edges of the tier and downward toward said intermediate tier.

17. A rack according to any preceding claim, wherein the bottom tier has a substantially planar upper surface.

18. A rack according to claim 1 3, wherein the bottom tier includes an upper surface having first and second portions, said first and second portions each being substantially planar but not coplanar with each other, said first and second portions intersecting at a parting line located inward from the third and fourth side edges of said tier and upward toward said intermediate tier.

19. A rack according to any preceding claim, wherein the top tier has a substantially planar lower surface.

20. A rack according to claim 13, wherein:

the top tier includes a lower surface having first and second portions, said first and second portions each being substantially planar but not coplanar with each other, said first and second portions intersecting at a parting line located inward from the first and second edges of said tier and downward toward said intermediate tier; and said bottom tier includes an upper surface having third and fourth portions, said third and fourth portions each being substantially planar but not coplanar with each other, said third and fourth portions intersecting at a parting line located inward from the third and fourth edges of said tier and upward toward said intermediate tier.

21. A rack according to claim 14, wherein:

said supports (20, 21) have substantially planar inner surfaces, said surfaces being disposed opposite one another and in planes which are substantially parallel to one another and to said bottom set of bars.

22. A rack according to claim 14, wherein a portion of one of the edges of said intermediate tier extends outward relative to the respective edge of the bottom tier aligned therewith.

23. A rack according to claim 14, wherein the first edge of said intermediate tier extends outward relative to the first edge of said bottom tier.

24. A rack according to claim 14, wherein the edges of each tier define a generally rectangular periphery and wherein each bar of said top set intersects each bar of said bottom set at substantially right angles.

25. A rack according to claim 24, wherein the rectangular periphery of each tier substantially corresponds in shape and dimensions with the shape and dimensions of the rectangular periphery of each of the other tiers.

26. A rack according to claim 25, wherein the first, second, third, and the fourth edges of each tier are aligned substantially coplanar with the first, second, third, and fourth edges, respectively, of each of the other tiers.

27. A rack according to claim 24, 25 or 26, wherein said bottom tier further includes a plurality of apertures, aligned with apertures in said top and intermediate tiers.

28. A rack according to any one of claims 24 to 27, wherein said top and bottom bars define generally square apertures.

29. A rack according to any one of claims 24 to 28, wherein said top tier has generally square apertures.

30. An injection mould for the manufacture of a single-piece rack having top, bottom and intermediate tiers selectively interconnected in spaced superposed relation, the intermediate tier being a lattice defined by intersecting top and bottom sets of bars, the bars within each set being substantially parallel and the top set of bars being superposed over the bottom set of bars characterized by comprising:

an injection mould half (40) and an ejection mould half (42), the ejection mould half being movable along a predetermined axial path relative to the injection mould half between a mould-closed position and a mould-open position and the ejection mould half cooperating with the injection mould half in the mould-closed position to define a mould cavity corresponding to the rack, wherein a first slide (31, 43) is associated with the injection mould half, and has a lower surface portion having parallel channels (35) corresponding in dimensions to the dimensions of the top set of bars of the intermediate tier and being aligned parallel to the axial path of movement of the ejection mould half; and wherein the ejection mould half includes a first core slide (60) movable along a predetermined axial path at an angle relative to the path of movement of the ejection mould half, an upper surface portion of the first core slide including parallel channels (62) corresponding in cross-sectional dimensions to the cross-sectional dimensions of the bottom set of bars and being aligned parallel to the axial path of movement of the first core slide (60), the channels (62) in the first core slide (60) cooperating with the channels (35) in the slides of the injection mould half to define the portion of the mould cavity corresponding to the lattice of the intermediate tier of the rack.

31. A mould according to claim 30 further comprising a further slide (43, 41) associated with the ejection mould half and having a lower surface portion having parallel channels (35) corresponding in cross-sectional dimension to the cross-sectional parallel to the axial path of movement of the injection mould half (42) and cooperating in the mould-closed position with the channels (47) of the first slide (43) to define said first portion of the mould cavity corresponding to the top set of bars of the intermediate tier of the rack, said ejection mould half (42) including a retainer block (30) which includes said first core slide and a second core slide (70) which is movable along a predetermined coaxial path in an opposite direction relative to said first core slide (60) and at an angle relative to the path of movement of the injection mould half (42), an upper surface portion parallel to said second core slide including parallel channels (72) corresponding to the cross-sectional dimension of the bottom set of bars, the channels (72) being aligned parallel to the coaxial paths of movement of said first and second core slides, the channels (62) of the first core slide cooperating with the channels (72) of the second core slide (70) in the mould closed position to define as second portion of the mould cavity corresponding to the bottom set of the bars of the intermediate tier of the rack and the second portion of the mould cavity

cooperating with the first portion of the mould cavity to thereby define a portion of the mould cavity corresponding to the lattice of the intermediate tier of the rack.

32. A mould according to claim 31, including first (80) and second (90) slide blocks, each of the slide blocks (80, 90) being releasably retained within the retainer block (30) and movable along a predetermined path relative to the retainer block between a block-open position and block-closed position, the slide blocks (80, 90) being disposed in their block-open positions away from one another and away from the moulded rack, the upper slide block (80) cooperating in its block-closed position with upper surface portions (37, 49) of the first (31) and second (43) slides to define that portion of the mould cavity corresponding to the top tier of the rack, the lower slide block (90) cooperating in its block-closed position with lower surface portions (63, 73) of the first and second core slides (60, 70) to define that portion of the mould cavity corresponding to the bottom tier of the rack.

33. A mould according to claim 32, wherein the upper surface portions (37, 49) of the first and second slides (41, 43) are each substantially planar and the first slide block (80) further includes projecting cores (83) which cooperate with the respective planar upper surface portions (37, 49) of the first and second slides (31, 43) to define the apertures of the upper tier.

34. A mould according to claim 32 or 33, wherein the bottom tier of the rack includes apertures and the lower surface portions (63, 73) of the first and second core slides (60, 70) are each substantially planar and the second slide block (90) includes projection cores (91) which cooperate with the respective planar lower surface portions (63, 73) of the first and second core slides (60, 70) to define the apertures in the bottom tier.

35. A mould according to any one of claims 31 to 34, wherein the intermediate tier of the rack is connected to the bottom tier by first and second supports and is further connected to the top tier by third and fourth supports and wherein the injection mould half (40) further includes a vertical surface portion (39) disposed below the second slide (43) and including a channel (38) corresponding in cross-sectional dimension to the cross-sectional dimension of the rear support, the retainer block (30) further includes a vertical surface portion (69) disposed below the first slide (31) and including a channel, corresponding in cross-sectional dimension to the cross-sectional dimension of the front support, and the first and second core slides (60, 70) further include first and second side surface portions which cooperate in the mould-closed position with the vertical surface portion (69) of the retainer block to define that portion of the mould cavity corresponding to the first support of the rack, the second surface portions cooperating in the mould-closed position with the vertical surface portion (39) of the injection mould half (40) to define that portion of the mould cavity corresponding to the second support of the rack.

36. A mould according to claim 35, wherein the first core slide (60) further includes a vertical surface portion having a channel which cooperates in the mould-closed position with first side surface portions of the first and second slides (32, 43) to define that portion of the mould cavity corresponding to the third side support of the rack and the second core slide (70) further includes a vertical surface portion (76) having a channel which cooperates in the mould-closed position with second side portions of the first and second slides (32, 43) to define that portion of the mould cavity corresponding to the fourth side support of the rack.

37. A mould according to claim 36, wherein the rack further includes an upper spacer extending between the top tier and the intermediate tier and a lower spacer extending between the intermediate tier and the bottom tier, the first and second slides (31, 43) further include opposed parting surfaces each including a channel (36, 38), the parting surfaces cooperating in the mould-closed position so that the channels (36, 38) define that portion of the mould cavity corresponding to the upper spacer, and the first and second core slides (60, 70) further include opposed parting surfaces each including a channel (14, 64), the surfaces cooperating in the mould-closed position so that the channels (14, 64) define that portion of the mould cavity corresponding to the lower spacer.

**Patentansprüche**

1. Einteiliges Spritzgußgestell (10), gekennzeichnet durch eine Vielzahl von mit Abstand übereinander angeordneter Lagen (12, 14, 16), mit einer oberen Lage (12), einer unteren Lage (16) und einer Zwischenlage (14), wobei die Zwischenlage zwischen der oberen und der unteren Lage angeordnet ist, wobei die obere Lage Öffnungen (11) aufweist, wobei die Zwischenlage eine obere Anordnung von Leisten (15) und eine untere Anordnung von Leisten (17) aufweist, wobei die Anordnung der oberen Leisten zur Bildung von Öffnungen oberhalb der Anordnung der unteren Leisten in einer diese kreuzenden Weise angeordnet ist, wobei die Öffnungen der Zwischenlage zu den Öffnungen der oberen Lage ausgerichtet sind, durch erste Stützmittel (20) zur Verbindung der oberen Lage und der Zwischenlage und durch zweite Stützmittel (21) zur Verbindung der Zwischenlage mit der unteren Lage.

2. Spritzgußgestell nach Anspruch 1, dadurch gekennzeichnet, daß jede der Lagen einen Umfangsabschnitt aufweist, durch den Kanten gebildet werden, wobei die Kanten der oberen Lage mit den Kanten der Zwischenlage und die Kanten der Zwischenlage mit den Kanten der unteren Lage ausgerichtet sind, wobei durch die ersten Stützmittel (20) ein Teil der Kanten der oberen Lage und ein Teil der Kanten der Zwischenlage miteinander in Verbindung stehen und wobei durch die zweiten Stützmittel (21) ein Teil der Kanten der Zwischenlage und ein Teil der Kanten der unteren Lage miteinander in Verbindung stehen.

3. Spritzgußgestell nach Anspruch 1, dadurch gekennzeichnet, daß jede der Lagen einen Umfangsabschnitt mit einander gegenüberliegenden ersten und zweiten und einander gegenüberliegenden dritten und vierten Kanten aufweist, daß die ersten, zweiten, dritten und vierten Kanten der oberen Lage mit den entsprechenden ersten, zweiten, dritten und vierten Kanten der Zwischenlage ausgerichtet sind und daß die ersten, zweiten, dritten und vierten Kanten der Zwischenlage mit den entsprechenden ersten, zweiten, dritten und vierten Kanten der unteren Lage ausgerichtet sind, wobei die ersten Stützmittel einwärts bezüglich der jeweiligen Kanten der oberen Lage sowie der Zwischenlage angeordnet sind.

4. Spritzgußgestell nach Anspruch 1, dadurch gekennzeichnet, daß jede der Lagen einen Umfangsabschnitt mit einander gegenüberliegenden ersten und zweiten und einander gegenüberliegenden dritten und vierten Kanten aufweist, daß die ersten, zweiten, dritten und vierten Kanten der oberen Lage mit den entsprechenden ersten, zweiten, dritten und vierten Kanten der unteren Lage ausgerichtet sind und daß die zweiten Stützmittel (21) einwärts bezüglich der entsprechenden Kanten der Zwischenlage und der unteren Lage angeordnet sind.

5. Spritzgußgestell nach Anspruch 4, dadurch gekennzeichnet, daß die ersten Stützmittel einwärts bezüglich der jeweiligen Kanten der oberen Lage und der Zwischenlage angeordnet sind.

6. Spritzgußgestell nach einem der vorangegangenen Ansprüche, dadurch gekennzeichnet, daß die obere Anordnung der Leisten Gruppen von Leisten umfaßt, wobei die Leisten einer jeden Gruppe im wesentlichen parallel zueinander verlaufen.

7. Spritzgußgestell nach einem der vorangegangenen Ansprüche, dadurch gekennzeichnet, daß die untere Anordnung der Leisten Gruppen von Leisten umfaßt, wobei die Leisten einer jeden Gruppe im wesentlichen parallel zueinander verlaufen.

8. Spritzgußgestell nach einem der vorangegangenen Ansprüche, dadurch gekennzeichnet, daß sich die Anordnungen der oberen und unteren Leisten jeweils zwischen den Kanten der Zwischenlage erstrecken.

9. Spritzgußgestell nach einem der vorangegangenen Ansprüche, dadurch gekennzeichnet, daß jede Leiste der oberen Anordnung der Leisten sich zu jeder Leiste der unteren Anordnung der Leisten im wesentlichen rechtwinklig erstreckt.

10. Spritzgußgestell nach Anspruch 3, dadurch gekennzeichnet, daß jede der unteren Leisten der Zwischenlage eine im wesentlichen ebene obere Oberfläche aufweist und daß jede der oberen Leisten der Zwischenschicht eine im wesentlichen ebene untere Oberfläche aufweist.

11. Spritzgußgestell nach Anspruch 10, dadurch gekennzeichnet, daß die oberen Oberflächen der unteren Leisten im wesentlichen in einer Ebene liegen.

12. Spritzgußgestell nach Anspruch 10 oder 11, dadurch gekennzeichnet, daß die unteren Oberflächen der oberen Leisten im wesentlichen in einer Ebene liegen.

13. Spritzgußgestell nach Anspruch 1, dadurch gekennzeichnet, daß jede der Lagen einen Umfangsabschnitt mit einander gegenüberliegenden ersten und zweiten und einander gegenüberliegenden dritten und vierten Kanten aufweist, daß die ersten, zweiten, dritten und vierten Kanten der oberen Lage mit den jeweiligen ersten, zweiten, dritten und vierten Kanten der Zwischenlage ausgerichtet sind, daß die ersten, zweiten, dritten und vierten Kanten der Zwischenlage mit den jeweiligen ersten, zweiten, dritten und vierten Kanten der unteren Lage ausgerichtet sind, daß sich die Leisten der oberen Anordnung zwischen den ersten und zweiten Kanten der Zwischenlage und daß sich die Leisten der unteren Anordnung zwischen den dritten und vierten Kanten der Zwischenlage erstrecken.

14. Spritzgußgestell nach Anspruch 1, dadurch gekennzeichnet, daß die ersten Stützmittel eine, die erste Kante der Zwischenlage und die erste Kante der unteren Lage verbindende Stütze (20) und eine, die zweite Kante der Zwischenlage und die zweite Kante der unteren Lage verbindende Stütze (21) aufweisen.

15. Spritzgußgestell nach einem der vorangegangenen Ansprüche, gekennzeichnet ferner durch wenigstens einen, sich zwischen der oberen und der Zwischenlage erstreckenden oberen Abstandhalter, welcher obere Abstandhalter einwärts bezüglich der Kanten der Lagen angeordnet ist und ferner durch wenigstens einen, sich zwischen der Zwischenlage und der unteren Lage erstreckenden unteren Abstandhalter, welcher untere Abstandhalter einwärts bezüglich der Kanten der Lagen angeordnet ist.

16. Spritzgußgestell nach Anspruch 13, dadurch gekennzeichnet, daß die obere Lage eine untere, jeweils mit ersten und zweiten Abschnitten versehene Oberfläche aufweist, daß die ersten und zweiten Abschnitte jeweils im wesentlichen eben ausgebildet sind, sich jedoch nicht in einer gleichen Ebene erstrecken und daß die ersten und zweiten Abschnitte einander einwärts hinsichtlich der ersten und zweiten Kanten der Lage und an einer nach unten in Richtung auf die Zwischenlage hin orientierten Stelle im Bereich einer Teilungslinie schneiden.

17. Spritzgußgestell nach einem der vorangegangenen Ansprüche, dadurch gekennzeichnet, daß die untere Lage eine im wesentlichen ebene obere Oberfläche aufweist.

18. Spritzgußgestell nach Anspruch 13, dadurch gekennzeichnet, daß die untere Lage eine obere, mit ersten und zweiten Abschnitten versehene Oberfläche aufweist, daß die ersten und zweiten Abschnitte jeweils eben ausgebildet sind, sich jedoch nicht in der gleichen Ebene erstrecken, daß die ersten und zweiten Abschnitte einander einwärts bezüglich der dritten und vierten Kanten der Lage und an einer nach oben in Richtung auf die Zwischenlage hin orientierten Stelle im Bereich einer Teilungslinie schneiden.

19. Spritzgußgestell nach einem der vorangegangenen Ansprüche, dadurch gekennzeichnet, daß die obere Lage eine im wesentlichen ebene untere Oberfläche aufweist.

20. Spritzgußgestell nach Anspruch 13, dadurch gekennzeichnet, daß die obere Lage eine untere Oberfläche mit ersten und zweiten Abschnitten aufweist, daß die ersten und zweiten Abschnitte jeweils im wesentlichen eben ausgebildet sind, sich jedoch nicht in einer Ebene erstrecken, daß die ersten und zweiten Abschnitte einander einwärts bezüglich der ersten und zweiten Kanten der Lage und an einer nach unten in Richtung auf die Zwischenlage hin angeordneten Stelle im Bereich einer Teilungslinie schneiden, daß die untere Lage eine obere, mit dritten und vierten Abschnitten versehene Oberfläche aufweist, daß die dritten und vierten Abschnitte jeweils im wesentlichen eben ausgebildet sind, sich jedoch nicht in der gleichen Ebene erstrecken, daß die dritten und vierten Abschnitte einander einwärts bezüglich der dritten und vierten Kanten der Lage und an einer nach oben in Richtung auf die Zwischenlage hin orientierten Stelle im Bereich einer Teilungslinie schneiden.

21. Spritzgußgestell nach Anspruch 14, dadurch gekennzeichnet, daß die genannten Stützen (20, 21) im wesentlichen ebene innere Oberflächen aufweisen, daß die Oberflächen einander gegenüberliegend und in Ebenen angeordnet sind, die zueinander und zu der unteren Anordnung von Leisten parallel verlaufen.

22. Spritzgußgestell nach Anspruch 14, dadurch gekennzeichnet, daß sich ein Abschnitt einer der Kanten der genannten Zwischenlage bezüglich der jeweiligen Kanten der mit dieser ausgerichteten unteren Lage nach außen erstreckt.

23. Spritzgußgestell nach Anspruch 14, dadurch gekennzeichnet, daß sich die erste Kante der genannten Zwischenlage bezüglich der ersten Kante der genannten unteren Lage nach außen erstreckt.

24. Spritzgußgestell nach Anspruch 14, dadurch gekennzeichnet, daß die Kanten einer jeden Lage einen im allgemeinen rechteckigen Umfang definieren und daß jede Leiste der genannten unteren Anordnung durch jede Leiste der genannten oberen Anordnung im wesentlichen rechtwinklig geschnitten wird.

25. Spritzgußgestell nach Anspruch 24, dadurch gekennzeichnet, daß der rechteckige Umfang einer jeden Lage in Gestalt und Abmessungen im wesentlichen der Gestalt und den Abmessungen der rechtwinkligen Umfänge jeder der übrigen Lagen entspricht.

26. Spritzgußgestell nach Anspruch 25, dadurch gekennzeichnet, daß die ersten, zweiten, dritten und vierten Kanten einer jeden Lage sich im wesentlichen in einer gemeinsamen Ebene mit den ersten, zweiten, dritten und vierten Kanten der jeweiligen anderen Lagen erstrecken.

27. Spritzgußgestell nach einem der Ansprüche 24, 25 oder 26, dadurch gekennzeichnet, daß die untere Lage ferner eine Vielzahl von Öffnungen aufweist, die zu Öffnungen in der genannten oberen und mittleren Lage ausgerichtet sind.

28. Spritzgußgestell nach einem der Ansprüche 24 bis 27, dadurch gekennzeichnet, daß durch die oberen und unteren Leisten im allgemeinen quadratische Öffnungen gebildet werden.

29. Spritzgußgestell nach einem der Ansprüche 24 bis 28, dadurch gekennzeichnet, daß die genannte obere Lage im allgemeinen quadratische Öffnungen aufweist.

30. Spritzgießform zur Herstellung eines einstückigen Spritzgußteils, welches obere, untere und Zwischenlagen, die wahlweise untereinander in Verbindung stehen und mit Abstand übereinander angeordnet sind aufweist, wobei die Zwischenlage als Gitterwerk ausgebildet ist, welches durch einander schneidende obere und untere Anordnungen von Leisten gebildet wird, wobei die Leisten einer jeden Anordnung im wesentlichen parallel zueinander verlaufen und wobei die obere Anordnung der Leisten oberhalb der unteren Anordnung der Leisten angeordnet ist, gekennzeichnet durch eine Spritzgießhälfte (40) und eine Ausstoßhälfte (42), wobei die Ausstoßhälfte entlang eines vorherbestimmten axialen Weges relativ zu der Spritzgießhälfte zwischen einer Schließposition und einer Öffnungsposition bewegbar ist und wobei die Ausstoßhälfte mit der Spritzgießhälfte in der Schließposition zwecks Bildung eines, dem genannten Gestell entsprechenden Formraumes zusammenwirkt, wobei mit der Spritzgießhälfte ein erster Schlitten (31, 43) zusammenwirkt, der einen unteren, mit zueinander parallelen Kanälen (35) versehenen Oberflächenabschnitt aufweist, welche Kanäle hinsichtlich ihrer Abmessungen den Abmessungen der oberen Anordnung der Leisten der Zwischenlage entsprechen und die parallel zur axialen Bewegungsrichtung der Ausstoßhälfte verlaufen, wobei die Ausstoßhälfte einen ersten Kernschlitten (60) aufweist, der entlang eines vorherbestimmten axialen Weges unter einem Winkel zur Bewegungsrichtung der Auswerferhälfte bewegbar ist, wobei ein oberer Oberflächenabschnitt des ersten Kernschlittens zueinander parallele Kanäle (62) aufweist, welche Kanäle in ihren Querschnittsabmessungen den Querschnittsabmessungen der unteren Anordnung von Leisten entsprechen und welche Kanäle hinsichtlich der axialen Bewegungsrichtung des ersten Kernschlittens (60) parallel ausgerichtet sind, wobei die Kanäle (62) des ersten Kernschlittens (60) mit den Kanälen (35) der Schlitten der Spritzgießhälfte zur Bildung eines, dem Gitterwerk der Zwischenlage des Gestells entsprechenden Formraumes zusammenwirken.

31. Spritzgießform nach Anspruch 30, gekennzeichnet ferner durch einen weiteren Schlitten (43, 41), der mit der Ausstoßhälfte in Verbindung steht und der einen unteren Oberflächenabschnitt aufweist, der mit zueinander parallelen Kanälen (35) ausgerüstet ist, welche Kanäle in ihrem Querschnitt dem Querschnitt parallel zur Bewegungsrichtung der Ausstoßhälfte (42) entsprechen und welche in der Schließposition mit den Kanälen (47) des ersten Schlittens (43) zur Bildung des, der oberen Anordnung von Leisten der Zwischenlage des Gestells entsprechenden ersten Abschnitts des Formraumes zusammenwirken, wobei die genannte Ausstoßhälfte (42) einen Halteblock (30) umfaßt, der seinerseits den genannten ersten Kernschlitten umfaßt, wobei die Ausstoßhälfte (42) einen zweiten Kernschlitten (70) umfaßt, der entlang eines vorherbestimmten koaxialen Weges in einer zu dem ersten Kernschlitten (60) entgegengesetzten Richtung bewegbar ist, welche Bewegungsrichtung unter einem Winkel bezüglich der Bewegungsrichtung der Ausstoßhälfte (42) verläuft, wobei die Ausstoßhälfte einen oberen Oberflächenabschnitt aufweist, der sich parallel zu dem zweiten Kernschlitten erstreckt und parallele Kanäle (72) aufweist, die den Querschnittsabmessungen der unteren Anordnung der Leisten entsprechen, wobei die Kanäle (72) parallel zu den koaxialen Bewegungsbahnen der ersten und zweiten Kernschlitten ausgerichtet sind, wobei die Kanäle (62) des ersten Kernschlittens mit den Kanälen (72) des zweiten Kernschlittens (70) in der Schließposition zur Bildung des, der unteren Anordnung von Leisten der Zwischenlage des Gestells dienenden zweiten Abschnitts des Formraumes zusammenwirken, wobei der zweite Abschnitt des Formraumes mit dem ersten Abschnitt des Formraumes zur Bildung eines, dem Gitterwerk der Zwischenlage des Gestells entsprechenden Formraumes zusammenwirkt.

32. Spritzgießform nach Anspruch 31, gekennzeichnet durch erste (80) und zweite (90) Schlittenblöcke, wobei jeder der Schlittenblöcke (80, 90) in dem Halteblock (30) lösbar gehalten und entlang einer vorherbestimmten Bahn relativ zu dem Halteblock zwischen einer Öffnungs- und einer Schließposition bewegbar ist, wobei die Schlittenblöcke (80, 90) mit ihren Öffnungspositionen voneinander und von dem geformten Gestell entfernt angeordnet sind, wobei der obere Schlittenblock (80) in seiner Schließposition mit oberen Oberflächenabschnitten (37, 49) der ersten (31) und zweiten (43) Schlitten zur Bildung des Abschnitts des Formraumes zusammenwirkt, der der oberen Lage des Gestells entspricht, wobei der untere Schlittenblock (90) in seiner Schließposition mit unteren Oberflächenabschnitten (63, 73) der ersten und zweiten Kernschlitten (60, 70) zur Bildung des Abschnitts des Formraumes zusammenwirkt, der der unteren Lage des Gestells entspricht.

33. Spritzgießform nach Anspruch 32, dadurch gekennzeichnet, daß die oberen Oberflächenabschnitte (37, 49) der ersten und zweiten Schlitten (31, 43) jeweils im wesentlichen eben ausgebildet sind, daß der erste Schlittenblock (80) aus diesem herausragende Kerne (83) aufweist, die mit den entsprechenden oberen Oberflächenabschnitten (37, 49) der ersten und zweiten Schlitten (31, 43) zur Bildung der Öffnungen der oberen Lage zusammenwirken.

34. Spritzgießform nach Anspruch 32 oder 33, dadurch gekennzeichnet, daß die untere Lage des Gestells Öffnungen aufweist, daß die unteren Oberflächenabschnitte (63, 73) der ersten und zweiten Kernschlitten (60, 70) im wesentlichen eben ausgebildet sind, daß der zweite Schlittenblock (90) herausragende Kerne (91) aufweist, die mit den entsprechenden ebenen unteren Oberflächenabschnitten (63, 73) der ersten und zweiten Kernschlitten (60, 70) zur Bildung der Öffnungen der unteren Lage zusammenwirken.

35. Spritzgießform nach einem der Ansprüche 31 bis 34, dadurch gekennzeichnet, daß die Zwischenlage des Gestells mit der unteren Lage über erste und zweite Stützen und darüber hinaus mit der oberen Lage durch dritte und vierte Stützen in Verbindung steht, daß die Spritzgießhälfte (40) einen vertikalen Oberflächenabschnitt (39) aufweist, der unterhalb des zweiten Schlittens (43) angeordnet ist und einen Kanal (38) umfaßt, der in seinen Querschnittsabmessungen den Querschnittsabmessungen der rückseitigen Stütze entspricht, daß der Halteblock (30) ferner einen vertikalen Oberflächenabschnitt (69) aufweist, der unterhalb des ersten Schlittens (31) angeordnet ist und einen Kanal aufweist, der in seinen Querschnittsabmessungen den Querschnittsabmessungen der vorderen Stütze entspricht, daß die ersten und zweiten Kernschlitten (60, 70) ferner erste und zweite seitliche Oberflächenabschnitte aufweisen, die in der Schließposition mit dem vertikalen Oberflächenabschnitt (69) des Halteblocks zur Bildung des, der ersten Stütze des Gestells entsprechenden Teiles des Formraumes zusammenwirken und daß die zweiten Oberflächenabschnitte in der Schließposition mit dem vertikalen Oberflächenabschnitt (39) der Spritzgießhälfte (40) zur Bildung des, der zweiten Stütze des Gestells entsprechenden Teiles des Formraumes zusammenwirken.

36. Spritzgießform nach Anspruch 35, dadurch gekennzeichnet, daß der erste Kernschlitten (60) ferner einen vertikalen Oberflächenabschnitt aufweist, der mit einem Kanal versehen ist, der in der Schließposition mit ersten seitlichen Oberflächenabschnitten der ersten und zweiten Schlitten (31, 43) zur Bildung des, der dritten seitlichen Stütze des Gestells entsprechenden Teiles des Formraumes zusammenwirkt, daß der zweite Kernschlitten (70) ferner einen vertikalen Oberflächenabschnitt (76) aufweist, der mit einem Kanal versehen ist, der in der Schließposition mit seitlichen Abschnitten der ersten und zweiten Schlitten (31, 43) zur Bildung, des der vierten seitlichen Stütze des Gestells entsprechenden Teiles des Formraumes zusammenwirkt.

37. Spritzgießform nach Anspruch 36, dadurch gekennzeichnet, daß das Gestell ferner einen oberen, sich zwischen der oberen Lage und der Zwischenlage erstreckenden Abstandhalter und einen unteren, sich zwischen der Zwischenlage und der unteren Lage erstreckenden Abstandhalter aufweist, daß die ersten und zweiten Schlitten (31, 43) ferner einander gegenüberliegende Trennflächen aufweisen, deren jede einen Kanal (36, 48) umfaßt, wobei die Trennflächen in der Schließposition dahingehend zusammenwirken, daß die Kanäle (36, 48) den Teil des Formraumes umgrenzen, der dem oberen Abstandhalter entspricht, daß die ersten und zweiten Kernschlitten (60, 70) ferner einander gegenüberliegende Trennflächen aufweisen, deren jede einen Kanal (14, 64) aufweist, wobei die genannten Flächen in der Schließposition dahingehend zusammenwirken, daß durch die Kanäle (14, 64) der Teil des Formraumes umgrenzt wird, der dem unteren Abstandhalter entspricht.

**Revendications**

1. Rayon moulé par injection en une seule pièce (10), caractérisé par: une pluralité d'étages superposés espacés (12, 14, 16) comprenant un étage supérieur (12), un étage inférieur (16) et un étage intermédiaire (14), l'étage intermédiaire étant disposé entre les étages supérieur et inférieur, l'étage supérieur comportant des ouvertures (11), l'étage intermédiaire comportant un ensemble supérieur de barreaux (15) et un ensemble inférieur de barreaux (17), les barreaux de l'ensemble supérieur étant superposés aux barreaux de l'ensemble inférieur et les croisant de manière à définir des ouvertures, les ouvertures de l'étage intermédiaire étant alignées avec les ouvertures de l'étage supérieur; des premiers supports (20) pour interconnecter l'étage supérieur et l'étage intermédiaire; et des deuxièmes supports (21) pour interconnecter l'étage intermédiaire et l'étage inférieur.

2. Rayon suivant la revendication 1, dans lequel chacun des étages comprend une partie périphérique définissant des bords, les bords de l'étage supérieur étant alignés avec les bords de l'étage intermédiaire, et les bords de l'étage intermédiaire étant alignés avec les bords de l'étage inférieur, et dans lequel les premiers supports (20) interconnectent une partie des bords de l'étage supérieur et une partie des bords de l'étage intermédiaire; et les deuxièmes supports (21) interconnectent une partie des bords de l'étage intermédiaire et une partie des bords de l'étage inférieur.

3. Rayon suivant la revendication 1, dans lequel chacun des étages comprend une partie périphérique ayant un premier et un deuxième bords opposés et un troisième et un quatrième bords opposés; les premier, deuxième, troisième et quatrième bords de l'étage supérieur étant alignés avec les premier, deuxième, troisième et quatrième bords, respectivement, de l'étage intermédiaire; et dans lequel les premier, deuxième, troisième et quatrième bords de l'étage intermédiaire sont alignés avec les premier, deuxième, troisième et quatrième bords, respectivement, de l'étage inférieur; et dans lequel les premiers supports sont situés vers l'intérieur par rapport aux bords respectifs des étages supérieur et intermédiaire.

4. Rayon suivant la revendication 1, dans lequel chacun des dits étages comprend une partie périphérique ayant un premier et un deuxième bords opposés et un troisième et un quatrième bords opposés; les premier, deuxième, troisième et quatrième bords de l'étage supérieur étant alignés avec les premier, deuxième, troisième et quatrième bords, respectivement, de l'étage inférieur; et dans lequel les deuxièmes supports (21) sont situés vers l'intérieur par rapport aux bords respectifs des étages intermédiaire et inférieur.

5. Rayon suivant la revendication 4, dans lequel les premiers supports sont situés vers l'intérieur par rapport aux bords respectifs des étages supérieur et intermédiaire.

6. Rayon suivant l'une quelconque des revendications précédentes, dans lequel l'ensemble supérieur de barreaux comprend des groupes de barreaux, les barreaux à l'intérieur de chaque groupe étant sensiblement parallèles.

7. Rayon suivant l'une quelconque des revendications précédentes, dans lequel l'ensemble inférieur de barreaux comprend des groupes de barreaux, les barreaux à l'intérieur de chaque groupe étant sensiblement parallèles.

8. Rayon suivant l'une quelconque des revendications précédentes, dans lequel les barreaux supérieurs et inférieurs s'étendent entre les bords de l'étage intermédiaire.

9. Rayon suivant l'une quelconque des revendications précédentes dans lequel chaque barreau de l'ensemble supérieur croise chaque barreau de l'ensemble inférieur sensiblement à angle droit.

10. Rayon suivant la revendication 3, dans lequel chacun des barreaux inférieurs de l'étage intermédiaire présente une surface supérieure sensiblement plane; et chacun des barreaux supérieurs de l'étage intermédiaire présente une surface inférieure sensiblement plane.

11. Rayon suivant la revendication 10, dans lequel les surfaces supérieures des barreaux inférieurs sont sensiblement dans un même plan commun.

12. Rayon suivant la revendication 10 ou 11, dans lequel les surfaces inférieures des barreaux supérieurs sont sensiblement dans un même plan commun.

13. Rayon suivant la revendication 1, dans lequel chacun des étages comprend une partie périphérique ayant un premier et un deuxième bords opposés et un troisième et un quatrième bords opposés; les premier, deuxième, troisième et quatrième bords de l'étage supérieur étant alignés avec les premier, deuxième, troisième et quatrième bords, respectivement, de l'étage intermédiaire; et dans lequel les premier, deuxième, troisième et quatrième bords de l'étage intermédiaire sont alignés avec les premier, deuxième, troisième et quatrième bords, respectivement, de l'étage inférieur; et dans lequel les barreaux dudit ensemble supérieur s'étendent entre les premier et deuxième bords dudit étage intermédiaire, et les barreaux dudit ensemble inférieur s'étendent entre les troisième et quatrième bords dudit étage intermédiaire.

14. Rayon suivant la revendication 1, dans lequel les premiers supports comprennent: un support (20) interconnectant le premier bord de l'étage intermédiaire et le premier bord de l'étage inférieur; et un support (21) interconnectant le deuxième bord de l'étage intermédiaire et le deuxième bord de l'étage inférieur.

15. Rayon suivant l'une quelconque des revendications précédentes, comprenant en outre au moins une entretoise supérieure s'étendant entre l'étage supérieur et l'étage intermédiaire, l'entretoise supérieure étant située vers l'intérieur des bords des étages; et comprenant en outre au moins une entretoise inférieure s'étendant entre l'étage intermédiaire et l'étage inférieure, l'entretoise inférieure étant située vers l'intérieur des bords des étages.

16. Rayon suivant la revendication 13, dans lequel l'étage supérieur présente une surface inférieure comportant une première et une deuxième parties, les première et deuxième parties étant chacune sensiblement planes mais non dans un plan commun, les première et deuxième parties se coupant à l'endroit d'une ligne de séparation située vers l'intérieur par rapport aux premier et deuxième bords de l'étage et vers le bas, vers ledit étage intermédiaire.

17. Rayon suivant l'une quelconque des revendications précédentes, dans lequel l'étage inférieur présente une surface supérieure sensiblement plane.

18. Rayon suivant la revendication 13, dans lequel l'étage inférieur présente une surface supérieure comportant une première et une deuxième parties, lesdites première et deuxième parties étant chacune sensiblement planes mais non dans un plan commun, lesdites première et deuxième parties se coupant à l'endroit d'une ligne de séparation située vers l'intérieur par rapport aux troisième et quatrième bords latéraux dudit étage et vers le haut, vers ledit étage intermédiaire.

19. Rayon suivant l'une quelconque des revendications précédentes, dans lequel l'étage supérieur présente une surface inférieure sensiblement plane.

20. Rayon suivant la revendication 13, dans lequel: l'étage supérieur présente une surface inférieure comportant une première et une deuxième parties, lesdites première et deuxième parties étant chacune sensiblement planes mais non dans un plan commun, les dites première et deuxième parties se coupant à l'endroit d'une ligne de séparation située vers l'intérieur par rapport aux premier et deuxième bords dudit étage et vers le bas, vers ledit étage intermédiaire; et ledit étage inférieur présente une surface supérieure comprenant une troisième et une quatrième parties, lesdites troisième et quatrième parties étant chacune sensiblement planes mais non dans un plan commun, lesdites troisième et quatrième parties se coupant à l'endroit d'une ligne de séparation située vers l'intérieur par rapport aux troisième et quatrième bords dudit étage et vers le haut, vers ledit étage intermédiaire.

21. Rayon suivant la revendication 14, dans lequel les dits supports (20, 21) présentent des surfaces intérieures sensiblement planes, lesdites surfaces étant disposées en face l'une de l'autre et dans des plans qui sont sensiblement mutuellement parallèles et parallèles audit ensemble inférieur de barreaux.

22. Rayon suivant la revendication 14, dans lequel une partie d'un des bords dudit étage intermédiaire s'étend vers l'extérieur par rapport au bord respectif de l'étage inférieur aligné avec lui.

23. Rayon suivant la revendication 14, dans lequel le premier bord dudit étage intermédiaire s'étend vers l'extérieur par rapport au premier bord dudit étage inférieur.

24. Rayon suivant la revendication 14, dans lequel les bords de chaque étage définissent une périphérie sensiblement rectangulaire et dans lequel chaque barreau dudit ensemble supérieur croise chaque barreau dudit ensemble inférieur sensiblement à angle droit.

25. Rayon suivant la revendication 24, dans lequel la périphérie rectangulaire de chaque étage correspond sensiblement en forme et en dimensions à la forme et aux dimensions de la périphérie rectangulaire de chacun des autres étages.

26. Rayon suivant la revendication 25, dans lequel les premier, deuxième, troisième et quatrième bords de chaque étage sont alignés sensiblement dans un même plan avec les premier, deuxième, troisième et quatrième bords, respectivement, de chacun des autres étages.

27. Rayon suivant la revendication 24, 25 ou 26 dans lequel ledit étage inférieur comprend en outre une pluralité d'ouvertures alignées avec les ouvertures desdits étages supérieur et intermédiaire.

28. Rayon suivant l'une quelconque des revendications 24 à 27, dans lequel lesdits barreaux supérieurs et inférieurs définissent des ouvertures sensiblement carrées.

29. Rayon suivant l'une quelconque des revendications 24 à 28, dans lequel ledit étage supérieur comporte des ouvertures sensiblement carrées.

30. Moule à injection pour la fabrication d'un rayon en une seule pièce comprenant des étages supérieur, inférieur et intermédiaire sélectivement interconnectés en relation superposée espacée, l'étage intermédiaire étant un treillis défini par le croisement d'ensembles supérieur et inférieur de barreaux, les barreaux dans chaque ensemble étant sensiblement parallèles et l'ensemble supérieur de barreaux étant superposé à l'ensemble inférieur de barreaux, caractérisé en ce qu'il comprend: un demi-moule d'injection (40) et un demi-moule d'éjection (42), le demi-moule d'éjection étant déplaçable le long d'un chemin axial prédéterminé par rapport au demi-moule d'injection entre une position de moule fermé et une position de moule ouvert et le demi-moule d'éjection coopérant avec le demi-moule d'injection dans la position de moule fermé pour définir une cavité de moule correspondant au rayon; en ce qu'un premier tiroir (31, 43) est associé au demi-moule d'injection et présente une partie de surface inférieure ayant des canaux parallèles (35) dont les dimensions correspondent aux dimensions de l'ensemble supérieur de barreaux de l'étage intermédiaire et qui sont parallèles au chemin axial de mouvement du demi-moule d'éjection; et en ce que le demi-moule d'éjection comprend un premier noyau coulissant (60) déplaçable le long d'un chemin axial prédéterminé suivant un angle par rapport au chemin de mouvement du demi-moule d'éjection, une partie de surface supérieure du premier noyau coulissant comportant des canaux parallèles (62) dont les dimensions de section transversale correspondent aux dimensions de section transversale de l'ensemble inférieur de barreaux et qui sont parallèles au chemin axial de mouvement du premier noyau coulissant (60), les canaux (62) du premier noyau coulissant (60) coopérant avec les canaux (35) des tiroirs du demi-moule d'injection pour définir la partie de la cavité de moule correspondant au treillis de l'étage intermédiaire du rayon.

31. Moule suivant la revendication 30, comprenant en outre un autre tiroir (43, 41) associé au demi-moule d'éjection et présentant une partie de surface inférieure ayant des canaux parallèles (35) dont la dimension de section transversale correspond à la dimension de l'ensemble supérieur de barreaux de l'étage intermédiaire et qui sont parallèles au chemin axial de mouvement du demi-moule d'injection (42) et coopèrent dans la position de moule fermé avec les canaux (47) du premier tiroir (43) pour définir ladite première partie de la cavité de moule correspondant à l'ensemble supérieur de barreaux de l'étage intermédiaire du rayon, ledit demi-moule d'éjection (42) comprenant un bloc de retenue (30) qui inclut ledit premier noyau coulissant et un deuxième noyau coulissant (70) déplaçable le long d'un chemin coaxial prédéterminé dans une direction opposée par rapport audit premier noyau coulissant (60) et suivant un angle par rapport au chemin de mouvement du demi-moule d'injection (42), une partie de surface supérieure parallèle audit deuxième noyau coulissant comprenant des canaux parallèles (72) correspondant à la dimension de section transversale de l'ensemble inférieur de barreaux, les canaux (72) étant parallèles aux chemins coaxiaux de mouvement desdits premier et deuxième noyaux coulissants, les canaux (62) du premier noyau coulissant coopérant avec les canaux (72) du deuxième noyau coulissant (70) dans la position de moule fermé pour définir une deuxième partie de la cavité de moule correspondant à l'ensemble inférieur des barreaux de l'étage intermédiaire du rayon, et la deuxième partie de la cavité de moule coopérant avec la première partie de la cavité de moule pour définir ainsi une partie de la cavité de moule correspondant au treillis de l'étage intermédiaire du rayon.

32. Moule suivant la revendication 31, comprenant un premier (80) et un deuxième (90) blocs coulissants, chacun des blocs coulissants (80, 90) étant retenu de façon libérable dans le bloc de retenue (30) et étant déplaçable le long d'un chemin prédéterminé par rapport au bloc de retenue entre une position de bloc ouvert et une position de bloc fermé, les blocs coulissants (80, 90) dans leurs positions de bloc ouvert étant éloignés l'un de l'autre et du rayon moulé, le bloc coulissant supérieur (80) coopérant dans sa position de bloc fermé avec des parties de surface supérieure (37, 49) du premier (31) et du deuxième (43) tiroirs pour définir la partie de la cavité de moule qui correspond à l'étage supérieur du rayon, le bloc coulissant inférieur (90) coopérant dans sa position de bloc fermé avec des parties de surface inférieure (63, 73) des premier et deuxième noyaux coulissants (60, 70) pour définir la partie de la cavité de moule qui correspond à l'étage inférieur du rayon.

33. Moule suivant la revendication 32, dans lequel les parties de surface supérieure (37, 49) des premiers et deuxièmes tirois (41, 43) sont chacune sensiblement planes et le premier bloc coulissant (80) comprend, en outre, des bossages (83) qui coopèrent avec les parties de surface supérieure planes respectives (37, 49) des premier et deuxième tiroirs (31, 43) pour définir les ouvertures de l'étage supérieur.

34. Moule suivant la revendication 32 ou 33, dans lequel l'étage inférieur du rayon comprend des ouvertures et les parties de surface inférieure (63, 73) des premier et deuxième noyaux coulissants (60, 70) sont chacune sensiblement planes et le deuxième bloc coulissant (90) comporte des bossages (91) qui coopèrent avec les parties de surface inférieure planes respectives (63, 73) des premier et deuxième noyaux coulissants (60, 70) pour définir les ouvertures de l'étage inférieur.

35. Moule suivant l'une quelconque des revendications 31 à 34, dans lequel l'étage intermédiaire du rayon est connecté à l'étage inférieur par des premiers et des deuxièmes supports et il est en outre connecté à l'étage supérieur par des troisièmes et quatrièmes supports, et dans lequel le demi-moule d'injection (40) comprend en outre une partie de surface verticale (39) disposée au-dessous du deuxième tiroir (43) et comportant un canal (38) dont la dimension de section transversale correspond à la dimension de section transversale du support arrière, le bloc de retenue (30) présente en outre une partie de surface verticale (69) disposée au dessous du premier tiroir (31) et comprenant un canal dont la dimension de section transversale correspond à la dimension de section transversale du support avant, et les premier et deuxième noyaux coulissants (60, 70) comprennent en outre une première et une deuxième parties de surface latérale qui coopèrent, dans la position de moule fermé, avec les parties de surface verticale (69) du bloc de retenue pour définir la partie de la cavité de moule qui correspond au premier support du rayon, les deuxièmes parties de surface coopérant dans la position de moule fermé avec la partie de surface verticale (39) du demi-moule d'injection (40) pour définir la partie de la cavité de moule qui correspond au deuxième support du rayon.

36. Moule suivant la revendication 35, dans lequel le premier noyau coulissant (60) comprend en outre une partie de surface verticale comportant un canal qui coopère dans la position de moule fermé avec des premières parties de surface latérale des premier et deuxième tiroirs (32, 43) pour définir la partie de la cavité de moule qui correspond au troisième support latéral du rayon, et le deuxième noyau coulissant (70) comprend en outre une partie de surface verticale (76) comportant un canal qui coopère dans la position de moule fermé avec des deuxièmes parties latérales des premier et deuxième tiroirs (32, 43) pour définir la partie de la cavité de moule qui correspond au quatrième support latéral du rayon.

37. Moule suivant la revendication 36, dans lequel le rayon comprend en outre une entretoise supérieure s'étendant entre l'étage supérieur et l'étage intermédiaire et une entretoise inférieure s'étendant entre l'étage intermédiaire et l'étage inférieur, les premier et deuxième tiroirs (31, 43) comprennent en outre des surfaces de séparation opposées comportant chacune un canal (36, 38), les surfaces de séparation coopérant dans la position de moule fermé de sorte que les canaux (36, 38) définissent la partie de la cavité de moule qui correspond à l'entretoise supérieure, et les premier et deuxième noyaux coulissants (60, 70) comprennent en outre des surfaces de séparation opposées comportant chacune un canal (14, 64), les surfaces coopérant dans la position de moule fermé de sorte que les canaux (14, 64) définissent la partie de la cavité de moule qui correspond à l'entretoise inférieure.

FIG. I

FIG. 2

FIG. 3

FIG. 4

FIG. 5

FIG. 6

EP 0 142 284 B1

FIG. 7

FIG. 8

EP 0 142 284 B1

FIG. 9

FIG. 10

*FIG. 11*